# EUROPEAN PATENT APPLICATION

(11) **EP 4 429 360 A1**
(43) Date of publication of application: **11.09.2024**
(21) Application number: 22889349.1
(22) Date of filing: 03.11.2022
(51) Int. Cl.: H04W 72/04

(54) **UPLINK TRANSMISSION INFORMATION DETERMINATION METHOD, UPLINK TRANSMISSION METHOD AND UPLINK TRANSMISSION CONFIGURATION METHOD**

(30) Priority: 05.11.2021 CN 202111306875
(71) Applicant: Vivo Mobile Communication Co., Ltd., Dongguan, Guangdong 523863 (CN)
(72) Inventor: LI, Gen, Dongguan, Guangdong 523863 (CN)
(74) Representative: Conti, Marco
(86) International application number: PCT/CN2022/129468
(87) International publication number: WO 2023/078327

(57) **Abstract**

This application discloses an uplink transmission information determining method, an uplink transmission method, and an uplink transmission configuration method, pertaining to the field of communication technologies. The uplink transmission information determining method in an embodiment of this application includes: Before transmitting a target uplink signal or target uplink channel, a terminal obtains first information related to the target uplink signal or target uplink channel; and the terminal determines expected transmission information in a case that the first information meets a preset condition. The expected transmission information includes: information of expecting or supporting frequency hopping transmission for the target uplink signal or target uplink channel, or information of not expecting or not supporting frequency hopping transmission for the target uplink signal or target uplink channel.

## Description

### CROSS-REFERENCE TO RELATED APPLICATIONS

This application claims priority to Chinese Patent Application No. 202111306875.0, filed in China on November 5, 2021, which is incorporated herein by reference in its entirety.

### TECHNICAL FIELD

This application pertains to the field of communication technologies and specifically to an uplink transmission information determining method, an uplink transmission method, and an uplink transmission configuration method.

### BACKGROUND

In frequency hopping transmission technology, the frequency domain positions of two consecutive hops can span one or more sub-bands or physical resource block (Physical Resource Block, PRB) sets. The use of frequency hopping transmission can enhance the secrecy and anti-interference capabilities of communication.

In related technologies, to improve the secrecy and anti-interference capabilities of communication, network-side devices typically configure terminals to perform transmissions with frequency hopping. In such cases, if two consecutive hops span at least two listen before talk (Listen Before Talk, LBT) sub-bands or PRB sets, and the terminal operates on an unlicensed band, user equipment (User Equipment, UE) will be unable to implement LBT, thereby preventing the UE from accurately selecting the channel for access.

As can be seen from the above, the method of configuring terminals to perform frequency hopping transmission by network-side devices in related technologies will cause terminals operating on unlicensed bands to be unable to implement LBT.

### SUMMARY

Embodiments of this application provide an uplink transmission information determining method, an uplink transmission method, and an uplink transmission configuration method, able to solve the problem in related technologies where terminals perform frequency hopping transmission according to the configuration of network-side devices, which causes terminals operating on unlicensed bands to be unable to implement LBT.

According to a first aspect, an uplink transmission information determining method is provided. The method includes:
before transmitting a target uplink signal or target uplink channel, obtaining, by a terminal, first information related to the target uplink signal or target uplink channel; and
determining, by the terminal, expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel.

According to a second aspect, an uplink transmission information determining apparatus is provided, applied to a terminal, where the apparatus includes:
a first obtaining module, configured to, before transmission of a target uplink signal or target uplink channel, obtain first information related to the target uplink signal or target uplink channel; and
a first determining module, configured to determine expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel.

According to a third aspect, an uplink transmission method is provided, including:
implementing, by a terminal, channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, the terminal performing LBT for N LBT sub-bands or PRB sets and executing the frequency hopping transmission when LBT is successful for all the LBT sub-bands or PRB sets; and
before the M-th hop transmission of the frequency hopping transmission, the terminal performing LBT for one or more LBT sub-bands corresponding to the M-th hop transmission and executing the M-th hop transmission when LBT is successful; where
N is an integer greater than 1 and M is an integer greater than or equal to 1.

According to a fourth aspect, an uplink transmission apparatus is provided, applied to a terminal, where the apparatus includes:
a channel access module, configured to implement channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; where
N is an integer greater than 1 and M is an integer greater than or equal to 1.

According to a fifth aspect, an uplink transmission configuration method is provided, including:
obtaining, by a network-side device, expected transmission information of a terminal, where the expected transmission information includes: information of not expecting or not supporting frequency hopping transmission for the target uplink signal or target uplink channel, or information of expecting or supporting frequency hopping transmission for the target uplink signal or target uplink channel; and
sending, by the network-side device, target configuration information to the terminal based on the expected transmission information, where the target configuration information is used to configure transmission resources for the target uplink signal or target uplink channel.

According to a sixth aspect, an uplink transmission configuration apparatus is provided, applied to a network-side device, where the apparatus includes:
a second obtaining module, configured to obtain expected transmission information of a terminal, where the expected transmission information includes: information of not expecting or not supporting frequency hopping transmission for a target uplink signal or target uplink channel, or information of expecting or supporting frequency hopping transmission for the target uplink signal or target uplink channel; and
a first configuration module, configured to send target configuration information to the terminal based on the expected transmission information, where the target configuration information is used to configure transmission resources for the target uplink signal or target uplink channel.

According to a seventh aspect, a terminal is provided, including a processor, a memory, and a program or instructions stored in the memory and capable of running on the processor, and when the program or instructions are executed by the processor, the steps of the method according to the first or third aspect are implemented.

According to an eighth aspect, a terminal is provided, including a processor and a communication interface. The processor is configured to obtain first information related to a target uplink signal or target uplink channel before transmission of the target uplink signal or target uplink channel, and determine expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel;
and/or
the communication interface is configured to implement channel access using any one of the following manners, in a case that frequency hopping transmission is to be performed for the target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; where
N is an integer greater than 1 and M is an integer greater than or equal to 1.

According to a ninth aspect, a network-side device is provided. The network-side device includes a processor, a memory, and a program or instructions stored in the memory and capable of running on the processor. When the program or instructions are executed by the processor, the steps of the method according to the fifth aspect are implemented.

According to a tenth aspect, a network-side device is provided, including a processor and a communication interface. The communication interface is configured to obtain expected transmission information of a terminal, where the expected transmission information includes: information of not expecting or not supporting frequency hopping transmission for a target uplink signal or target uplink channel, or information of expecting or supporting frequency hopping transmission for the target uplink signal or target uplink; and
the processor is configured to generate target configuration information based on the expected transmission information, and the communication interface is further configured to send the target configuration information to the terminal, where the target configuration information is used to configure transmission resources for the target uplink signal or target uplink channel.

According to an eleventh aspect, a readable storage medium is provided. The readable storage medium stores a program or instructions, and when the program or instructions are executed by a processor, the steps of the method according to the first aspect are implemented, or the steps of the method according to the third aspect are implemented, or the steps of the method according to the fifth aspect are implemented.

According to a twelfth aspect, a chip is provided. The chip includes a processor and a communication interface. The communication interface is coupled to the processor, and the processor is configured to run a program or instructions to implement the steps of the method according to the first aspect, or the steps of the method according to the third aspect, or the steps of the method according to the fifth aspect.

According to a thirteenth aspect, a computer program or program product is provided. The computer program or program product is stored in a non-transient storage medium, and the computer program or program product is executed by at least one processor to implement the steps of the method according to the first aspect, or the steps of the method according to the third aspect, or the steps of the method according to the fifth aspect.

In the embodiments of this application, before transmitting the target uplink signal or target uplink channel, the terminal obtains the first information related to the target uplink signal or target uplink channel; and in the case that the first information meets the preset condition, the terminal determines the expected transmission information, where the expected transmission information includes: information of expecting or supporting frequency hopping transmission for the target uplink signal or target uplink channel, or information of not expecting or not supporting frequency hopping transmission for the target uplink signal or target uplink channel. In this way, the terminal can autonomously determine whether to expect or support frequency hopping transmission for the target uplink signal or target uplink channel, and thus, in the case that the target uplink signal or target uplink channel does not support or does not expect frequency hopping transmission, frequency hopping transmission can be avoided, or the network-side can be requested to configure resource configuration information that matches the expected transmission information for the target uplink signal or target uplink channel, so that the terminal does not perform frequency hopping transmission for the target uplink signal or target uplink channel. This can solve the problem in related technologies where the terminal performs frequency hopping transmission according to the configuration of the network-side device, which causes the terminal to be unable to implement LBT when operating in an unlicensed band.

### BRIEF DESCRIPTION OF DRAWINGS

FIG. 1 is a block diagram of a wireless communication system to which embodiments of this application are applicable;
FIG. 2 is a flowchart of an uplink transmission information determining method according to an embodiment of this application;
FIG. 3 is a flowchart of an uplink transmission method according to an embodiment of this application;
FIG. 4 is a flowchart of an uplink transmission configuration method according to an embodiment of this application;
FIG. 5 is a schematic structural diagram of an uplink transmission information determining apparatus according to an embodiment of this application;
FIG. 6 is a schematic structural diagram of an uplink transmission apparatus according to an embodiment of this application;
FIG. 7 is a schematic structural diagram of an uplink transmission configuration apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6th Generation, 6G) communication system.

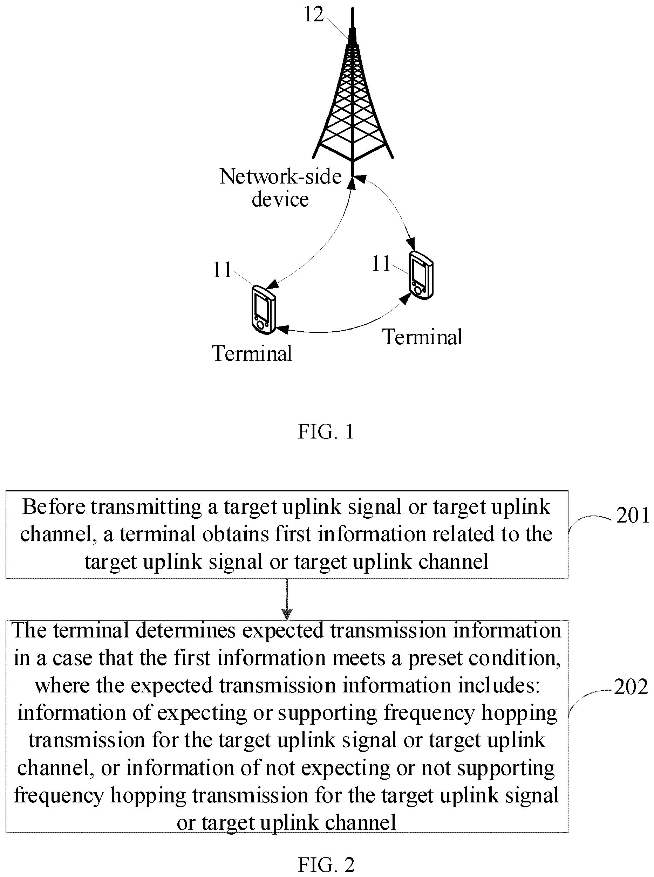

FIG. 1 is a block diagram of a wireless communication system to which embodiments of this application are applicable. The wireless communication system includes a terminal 11 and a network-side device 12. The terminal 11 may be terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), or pedestrian user equipment (Pedestrian User Equipment, PUE), a smart home appliance (a home appliance with a wireless communication function, for example, a refrigerator, a television, a washing machine, or furniture). The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that the specific type of the terminal 11 is not limited in the embodiments of this application. The network-side device 12 may be a base station or a core network device, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (wireless fidelity, WiFi) node, a transmission reception point (Transmitting Receiving Point, TRP), or some other appropriate term in the art. As long as the same technical effects are achieved, the base station is not limited to any specific technical term. It should be noted that the base station in the NR system is used as an only example in the embodiments of this application, and the base station is not limited to any specific type.

In related technologies, network-side devices can configure frequency hopping schemes for the physical uplink control channel (Physical Uplink Control Channel, PUCCH), physical uplink shared channel (Physical Uplink Shared Channel, PUSCH), and sounding reference signal (Sounding Reference Signal, SRS).

### I. Configuration of the frequency hopping scheme for PUCCH

For common (Common) PUCCHs (including PUCCH formats (format) 0/1), frequency hopping can only be configured on the initial uplink bandwidth part (initial UL BWP) of system information block 1 (System Information Block 1, SIB 1) on the primary cell (Pcell) through the PUCCH ID (PUCCH ID), and the PUCCH resource parameters are obtained by table lookup. Also, on this initial UL BWP, if interlaced (interlace) transmission is not configured, the common PUCCH defaults to an intra-slot (intra-slot) frequency hopping scheme.

For dedicated (Dedicated) PUCCHs (including PUCCH formats 0/1/2/3/4), frequency hopping can be configured on any uplink (Uplink, UL) bandwidth part (Bandwidth Part, BWP) of the Pcell or PUCCH secondary cell (Scell). For PUCCH transmission without repetition, an intra-slot frequency hopping scheme can be configured through the radio resource control (Radio Resource Control, RRC) PUSCH.

Furthermore, dedicated PUCCHs (including PUCCH formats 1/3/4) can also be configured with repetition over N slots (Slot). In this case, an intra-slot frequency hopping scheme or inter-slot (Inter-slot) frequency hopping scheme can be configured through RRC.

Additionally, for sub-slot (sub-slot) based dedicated PUCCHs (including PUCCH formats 0/1/2/3/4) mentioned in the communication protocol, they do not support PUCCH repetition and can be configured with intra-slot frequency hopping through the RRC PUCCH.

### II. Configuration of the frequency hopping scheme for PUSCH

The frequency hopping scheme for PUSCH is only applied in the case of resource allocation type 1 (resource allocation type 1).
(1) For PUSCH scheduled by the random access response (Random Access Response, RAR) UL grant (grant) or by downlink control information (Downlink Control Information, DCI) format 0_0 scrambled by the temporary cell radio network temporary identifier (Temporary Cell-Radio Network Temporary Identifier, TC-RNTI), the BWP size is the size of the initial UL BWP. Currently, repetition is unavailable and the intra-slot frequency hopping scheme is enabled by default, and whether the scheduled PUSCH undergoes transmission with intra-slot frequency hopping is controlled by the frequency hopping field (frequency hopping field) in the DCI.
(2) For PUSCH transmitted by Message A (Msg A), repetition is currently unavailable, and whether the PUSCH undergoes transmission with intra-slot frequency hopping can be determined through the indication of msgA-intraSlotFrequencyHopping (msgA-intraSlotFrequencyHopping).
(3) For PUSCH indicated as repetition type A (Repetition Type A) and scheduled by DCI formats 0_0/0_1/0_2, or type 2 (Type 2) configured grant (Configured Grant, CG) PUSCH activated by DCI formats 0_0/0_1/0_2 (for which these parameters are not configured: number of slots for configured grant (cg-nrofSlots) and number of intra-slot PUSCHs for configured grant (cg-nrofPUSCH-InSlot)):
   without repetition configured, the intra-slot frequency hopping scheme can be enabled through configuration by the RRC PUSCH;
   with repetition configured, the intra-slot or inter-slot frequency hopping scheme can be enabled through configuration by the RRC PUSCH, and
   finally, whether the scheduled PUSCH is transmitted following the frequency hopping scheme as enabled is controlled by the frequency hopping field in the DCI.
(4) For Type 1 CG PUSCH indicated as Repetition Type A (cg-nrofSlots and cg-nrofPUSCH-InSlot not configured),
   without repetition configured, the intra-slot frequency hopping scheme can be enabled through configuration by the RRC PUSCH;
   with repetition configured, the intra-slot or inter-slot frequency hopping scheme can be enabled through configuration by the RRC PUSCH, and
   finally, whether the Type 1 CG PUSCH is transmitted following the frequency hopping scheme as enabled is controlled by whether the frequency hopping offset (frequency hopping offset) field is configured in the RRC.
(5) For PUSCH indicated as Repetition Type B and scheduled by DCI 0_0/0_1/0_2, or Type 2 CG PUSCH activated by DCI 0_0/0_1/0_2 (cg-nrofSlots and cg-nrofPUSCH-InSlot not configured), the inter-repetition (Inter-repetition) or inter-slot (Inter-slot) frequency hopping scheme can be enabled through configuration by the RRC PUSCH. Finally, whether the scheduled PUSCH is transmitted following the frequency hopping scheme as enabled is controlled by the frequency hopping field in the DCI.
(6) For Type 1 CG PUSCH indicated as Repetition Type B (cg-nrofSlots and cg-nrofPUSCH-InSlot not configured), the inter-repetition or inter-slot frequency hopping scheme can be enabled through configuration by the RRC PUSCH. Finally, whether the Type 1 CG PUSCH is transmitted following the frequency hopping scheme as enabled is controlled by whether the frequency hopping offset field is configured in the RRC.

### III. Configuration of the frequency hopping scheme for SRS

Whether frequency hopping is enabled for SRS resources is determined by a relationship between values of the higher-layer configured parameters b_"hop" and B_"SRS". To be specific, when b_"hop"≥B_"SRS", SRS frequency hopping is disabled; otherwise, SRS frequency hopping is enabled. Additionally, depending on different values configured for the frequency hopping field, inter-symbol hopping within a slot or inter-slot frequency hopping can be supported for SRS transmission.

The difference between the frequency hopping transmission configuration in embodiments of this application and that in related technologies includes: in related technologies, the above frequency hopping schemes are configured by the network-side device, while in the embodiments of this application, the terminal and/or network-side device, based on the first information related to the target uplink signal or target uplink channel that the terminal needs to transmit, determines whether to expect or support frequency hopping transmission for the target uplink signal or target uplink channel. Thus, for a target uplink signal or target uplink channel that may cause reduced transmission performance, transmission errors, or channel access failure if frequency hopping transmission is performed, it can be determined that frequency hopping transmission is not expected or supported for that target uplink signal or target uplink channel. For example, when the terminal's target uplink channel operates in an unlicensed band, the terminal and the network-side device can each determine that frequency hopping transmission is not supported or not expected for the target uplink channel, to avoid the problem of being unable to complete channel access during frequency hopping transmission, as two hops span at least two LBT sub-bands or physical resource block (Physical Resource Block, PRB) sets (referred to as RB sets in the following embodiments).

The following describes, with reference to the drawings, some embodiments and their application scenarios in detail for the uplink transmission information determining method, uplink transmission method, uplink transmission configuration method, uplink transmission information determining apparatus, uplink transmission apparatus, uplink transmission configuration apparatus, terminal, and network-side device provided by embodiments of this application.

Refer to FIG. 2. An embodiment of this application provides an uplink transmission information determining method, which is executed by a terminal. As shown in FIG. 2, the uplink transmission information determining method can include the following steps.

Step 201. Before transmitting a target uplink signal or target uplink channel, the terminal obtains first information related to the target uplink signal or target uplink channel.

In specific implementation, the target uplink signal or target uplink channel can be understood as a signal or target uplink channel that may cause reduced transmission performance, transmission failure, or channel access failure if frequency hopping transmission is performed. The frequency hopping transmission can be understood as PRB positions of two adjacent hops being different, for example, frequency hopping transmission performed at the PRB positions of the first and second hops.

Optionally, the target uplink channel includes at least one of a physical uplink control channel PUCCH and a physical uplink shared channel PUSCH; or the target uplink signal includes a sounding reference signal SRS or a signal transmitted through the target uplink channel.

It should be noted that in addition to the above-mentioned SRS, PUCCH, and PUSCH, the target uplink signal or target uplink channel may also include other signals or target uplink channels that may be configured with frequency hopping transmission in the future, which are not specifically limited herein.

Optionally, the first information related to the target uplink signal or target uplink channel can be understood as information related to operational data of the target uplink signal or target uplink channel. For example, the first information includes at least one of the following:
a type of a band on which the target uplink signal or target uplink channel is transmitted or operates, where the type of the band includes licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, where the type of the target uplink channel includes common channel or dedicated channel;
a value of an intra-cell guard band configuration for a carrier on which the target uplink signal is transmitted or operates; and
a configured grant related parameter.

In implementation, the first information is used to assist the terminal in determining whether the target uplink signal or target uplink channel supports or expects frequency hopping transmission.

The configured grant related parameter can include at least one of the following: number of slots for configured grant (cg-nrofSlots), number of intra-slot PUSCHs for configured grant (cg-nrofPUSCH-InSlot), and configured grant retransmission timer (cg-transmission-Timer).

Additionally, the value of the intra-cell guard band configuration (intra cell guard band) for the carrier on which the target uplink signal is transmitted or operates can be equal to 0 or other values.

Step 202. The terminal determines expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel.

In implementation, the preset condition can be a predefined judgment condition for determining based on the first information that the target uplink signal or target uplink channel expects or supports frequency hopping transmission, and/or, a predefined judgment condition for determining based on the first information that the target uplink signal or target uplink channel does not expect or support frequency hopping transmission.

In some embodiments, the preset condition can be written into a communication standard protocol so that the terminal and the network-side device can each determine based on the preset condition whether an uplink transmission to be executed expects or supports frequency hopping transmission, thus enabling the network-side device to configure, for the uplink transmission, configuration information matching the expected transmission information and the terminal to perform the uplink transmission according to the expected transmission information.

Certainly, in other embodiments, the terminal can alternatively obtain the preset condition in advance, and when there is an uplink transmission task to be performed, determine based on the preset condition whether the uplink transmission expects or supports frequency hopping transmission, and report the expected transmission information so that the network-side device can configure, for the uplink transmission task, configuration information corresponding to the uplink transmission task.

Alternatively, after the terminal independently determines the expected transmission information, if it is determined that the expected transmission information does not match the configuration information configured by the network-side device for the uplink transmission task, for example, the terminal determines that the uplink transmission task does not support frequency hopping transmission, but the received configuration information is used to configure frequency hopping transmission for the uplink transmission task, then the terminal can perform the uplink transmission according to the expected transmission information, or report first indication information to the network-side device to indicate that the network-side device should reconfigure the configuration information for the uplink transmission task.

Through any one of the above manners, it can be ensured that when the uplink signal or target uplink channel transmission to be executed by the terminal does not support or does not expect frequency hopping transmission, frequency hopping transmission is not performed for the uplink signal or target uplink channel. For ease of description, in the following embodiments, an example is used where the preset condition is written into the communication standard protocol so that the terminal and network-side device can each determine, based on the preset condition, whether the uplink transmission to be executed expects or supports frequency hopping transmission, which does not constitute a specific limitation though. Under this implementation, the network-side device can configure, for the target uplink signal or target uplink channel transmission, configuration information corresponding to the expected transmission information. For example, when the target uplink signal or target uplink channel transmission does not support or does not expect frequency hopping transmission, the network-side device configures first configuration information that frequency hopping transmission is not to be performed for the target uplink signal or target uplink channel; when the target uplink signal or target uplink channel transmission supports or expects frequency hopping transmission, the network-side device configures second configuration information that frequency hopping transmission is to be performed for the target uplink signal or target uplink channel.

Optionally, the preset condition includes a first condition and/or a second condition, where the first condition includes at least one of the following:
transmitted or operating on a licensed band/non-shared spectrum access band;
transmitted or operating on an unlicensed band/shared spectrum access band, where the operating carrier contains only one LBT sub-band or PRB set;
transmitted or operating on an unlicensed band/shared access band, where an operating BWP contains only one LBT sub-band or PRB set or the transmission or operation is on an initial uplink bandwidth part (initial UL BWP);
a frequency domain bandwidth scheduled or configured containing only one LBT sub-band or PRB set;
a value of an intra-cell guard band configuration for a carrier on which the target uplink signal is transmitted or operates being equal to 0; and
non-interlaced (interlace) transmission being configured; and
the second condition includes at least one of the following:
   transmitted or operating on an unlicensed band/shared spectrum access band;
   transmitted or operating on an unlicensed band/shared access band, where an operating carrier contains more than one LBT sub-band or PRB set;
   transmitted or operating on an unlicensed band/shared access band, where an operating BWP contains more than one LBT sub-band or PRB set or the transmission or operation is on a non-initial UL BWP;
   a frequency domain bandwidth scheduled or configured containing more than one LBT sub-band or PRB set;
   the target uplink channel being a PUCCH, where the PUCCH is configured with interlaced transmission;
   a value of an intra-cell guard band configuration for a carrier on which the target uplink signal is transmitted or operates being not equal to 0; and
   a configured grant retransmission timer being configured.

The first condition can be a judgment condition for determining that the target uplink signal or target uplink channel expects or supports frequency hopping transmission, that is, when the first information meets the first condition, it can be determined that the target uplink signal or target uplink channel expects or supports frequency hopping transmission.

Correspondingly, the second condition can be a judgment condition for determining that the target uplink signal or target uplink channel does not expect or support frequency hopping transmission, that is, when the first information meets the second condition, it can be determined that the target uplink signal or target uplink channel does not expect or support frequency hopping transmission.

In implementation, the preset condition can include both the first condition and the second condition, or include only the first condition, or include only the second condition.

In some embodiments, if the first information falls within the following cases, the expected transmission information can be determined as expecting or supporting frequency hopping transmission for the target uplink signal or target uplink channel:
in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

In other embodiments, if the first information falls within the following cases, the expected transmission information can be determined as not expecting or not supporting frequency hopping transmission for the target uplink signal or target uplink channel:
application scenarios without expecting or supporting frequency hopping transmission for the target uplink signal or target uplink channel specifically include any one of the following cases:
in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

In this implementation, the first information can be compared with the first condition and/or the second condition to determine whether the first information meets the first condition, and/or determine whether the first information meets the second condition, thus determining whether the target uplink signal or target uplink channel transmission supports frequency hopping transmission.

Optionally, in a case that the first information meets the first condition, the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
   or,
in a case that the first information meets the second condition, the expected transmission information includes at least one of the following:
   expecting or supporting frequency hopping transmission for the target uplink signal or target uplink channel;
   expecting the network-side device to configure the second configuration information, or not expecting the network-side device to configure the first configuration information; and
   defaulting to performing frequency hopping transmission for the target uplink signal or target uplink channel.

### Option one

In the case that the expected transmission information includes not expecting or not supporting frequency hopping transmission for the target uplink signal or target uplink channel, or expecting or supporting frequency hopping transmission for the target uplink signal or target uplink channel, when the terminal obtains the resource configuration information configured by the network-side device for the target uplink signal or target uplink channel, the terminal can determine whether the resource configuration information matches the expected transmission information, and if not matching, take actions such as reporting an error or ignoring the resource configuration information to achieve uplink transmission that matches the expected transmission information.

For example, in the case that the expected transmission information includes not expecting or not supporting frequency hopping transmission for the target uplink signal or target uplink channel, if the network-side device configures such configuration information as to perform frequency hopping transmission for the target uplink signal or target uplink channel, the terminal can feed back first indication information to the network-side device. The first indication information is used to indicate that the target configuration information does not match the expected transmission information, so that the network-side device can reconfigure, based on the first indication information, configuration information that frequency hopping transmission is not to be performed for the target uplink signal or target uplink channel.

### Option two

In the case that the expected transmission information includes expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; or, expecting the network-side device to configure the second configuration information, or not expecting the network-side device to configure the first configuration information, the terminal can report the expected transmission information to the network-side device, or in the case that the preset condition is written into the communication standard, the network-side device can independently determine the expected transmission information based on the first information of the target uplink signal or target uplink channel and the preset condition, thus configuring first configuration information or second configuration information corresponding to the expected transmission information.

For example, in the case that the expected transmission information is expecting the network-side device to configure first configuration information that frequency hopping transmission is not to be performed for the target uplink signal or target uplink channel, the network-side device configures the first configuration information that frequency hopping transmission is not to be performed for the target uplink signal or target uplink channel; or, in the case that the expected transmission information is not expecting the network-side device to configure second configuration information that frequency hopping transmission is to be performed for the target uplink signal or target uplink channel, the network-side device configures the first configuration information that frequency hopping transmission is not to be performed for the target uplink signal or target uplink channel.

### Option three

In the case that the expected transmission information includes defaulting to not performing frequency hopping transmission for the target uplink signal or target uplink channel, or defaulting to performing frequency hopping transmission for the target uplink signal or target uplink channel, the terminal can perform frequency hopping transmission or not perform frequency hopping transmission for the target uplink signal or target uplink channel according to the default information.

For example, in the case that the expected transmission information includes defaulting to not performing frequency hopping transmission for the target uplink signal or target uplink channel, if the network-side device configures configuration information that frequency hopping transmission is to be performed for the target uplink signal or target uplink channel, the terminal can ignore this configuration information and not perform frequency hopping transmission for the target uplink signal or target uplink channel according to the default information.

It is worth noting that the expected transmission information can simultaneously include at least two of the three options mentioned above, which are not specifically limited herein.

It should be noted that in actual applications, the specific content of the first condition and/or the second condition can be determined based on the type of transmission of the target uplink signal or target uplink channel, the content of the first information, and the like.

For example, for a common PUCCH or a dedicated PUCCH, if at least one of the following first conditions is met, it is determined that the common PUCCH or dedicated PUCCH supports or expects frequency hopping transmission:
operating on a licensed band/non-shared spectrum access band;
operating on an unlicensed band/shared access band, where an operating carrier contains only one LBT sub-band or PRB set;
operating on an unlicensed band/shared access band, where an operating BWP contains only one LBT sub-band or PRB set or the operation is on an initial UL BWP;
a frequency domain bandwidth configured containing only one LBT sub-band or PRB set;
the PUCCH being configured with non-interlaced transmission; and
the value of the intra cell guard band for an operating carrier of the PUCCH being 0.

For example, for a common PUCCH or a dedicated PUCCH, if at least one of the following second conditions is met, it is determined that the common PUCCH or dedicated PUCCH does not support or does not expect frequency hopping transmission:
operating on an unlicensed band/shared spectrum access band;
operating on an unlicensed band/shared access band, where an operating carrier contains more than one LBT sub-band or PRB set;
operating on an unlicensed band/shared access band, where an operating BWP contains more than one LBT sub-band or PRB set or the operation is on a non-initial UL BWP;
a frequency domain bandwidth configured containing more than one LBT sub-band or PRB set for a common PUCCH;
the value of the intra cell guard band for an operating carrier of the PUCCH being not equal to 0; and
the PUCCH being configured with interlaced transmission.

It should be noted that for a dedicated PUCCH, when its first information meets the above first condition and/or does not meet the above second condition, the network-side device can configure the first configuration information that frequency hopping transmission is to be performed for the dedicated PUCCH, where the first configuration information includes a frequency hopping configuration indication.

When transmission is not configured with repetition, the frequency hopping configuration includes intra-slot frequency hopping; when transmission is configured with repetition, the hopping configuration includes intra-slot frequency hopping or inter-slot frequency hopping.

As an optional implementation, after the terminal determines the expected transmission information, the uplink transmission information determining method further includes:
determining, by the terminal, second information based on the expected transmission information, where the second information includes at least one of the following:
whether target configuration information by the network-side device for transmission of the target uplink signal or target uplink channel matches the expected transmission information; and
a frequency domain mapping method of the target uplink signal.

### Implementation one

The target configuration information can be understood as first configuration information used to configure frequency hopping transmission not to be performed for the target uplink signal or target uplink channel, or second configuration information used to configure frequency hopping transmission to be performed for the target uplink signal or target uplink channel.

In some embodiments, the target configuration information not matching the expected transmission information may include: the target configuration information is used to configure frequency hopping transmission to be performed for the target uplink signal or target uplink channel, while the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel.

In this case, the terminal can ignore the target configuration information and transmits the target uplink signal or target uplink channel according to the expected transmission information, or the terminal drops transmission of the target uplink signal or target uplink channel, or the terminal can feed back first indication information to the network-side device, where the first indication information is used to indicate that the target configuration information does not match the expected transmission information, that is, the terminal can proceed without performing frequency hopping transmission for the target uplink signal or target uplink channel, according to the expected transmission information.

In other embodiments, the target configuration information matching the expected transmission information includes the following three situations:

Situation one: The target configuration information is used to configure frequency hopping transmission to be performed for the target uplink signal or target uplink channel, and the expected transmission information includes at least one of the following:
expecting or supporting frequency hopping transmission for the target uplink signal or target uplink channel;
expecting the network-side device to configure the second configuration information, or not expecting the network-side device to configure the first configuration information; and
defaulting to performing frequency hopping transmission for the target uplink signal or target uplink channel.

Situation two: The target configuration information is used to configure frequency hopping transmission not to be performed for the target uplink signal or target uplink channel, and the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel.

Situation three: The target configuration information is used to configure frequency hopping transmission not to be performed for the target uplink signal or target uplink channel, and the expected transmission information includes at least one of the following:
expecting or supporting frequency hopping transmission for the target uplink signal or target uplink channel;
expecting the network-side device to configure the second configuration information, or not expecting the network-side device to configure the first configuration information; and
defaulting to performing frequency hopping transmission for the target uplink signal or target uplink channel.

It should be noted that in situation three above, although the target configuration information is used to configure frequency hopping transmission not to be performed for the target uplink signal or target uplink channel, and the expected transmission information indicates that frequency hopping transmission can be performed for the target uplink signal or target uplink channel, the target uplink signal or target uplink channel that supports frequency hopping transmission necessarily supports transmission without frequency hopping, so the terminal can still proceed without performing frequency hopping transmission for the target uplink signal or target uplink channel, according to the configuration of the network-side device.

Optionally, after the terminal determines whether the target configuration information by the network-side device for transmission of the target uplink signal or target uplink channel matches the expected transmission information, the method further includes:
in a case that the target configuration information matches the expected transmission information, transmitting, by the terminal, the target uplink signal or target uplink channel according to the target configuration information; and
in a case that the target configuration information does not match the expected transmission information, ignoring, by the terminal, the target configuration information and transmits the target uplink signal or target uplink channel according to the expected transmission information, or dropping, by the terminal, transmission of the target uplink signal or target uplink channel, or feeding back, by the terminal, first indication information to the network-side device, where the first indication information is used to indicate that the target configuration information does not match the expected transmission information.

Here, the target configuration information not matching the expected transmission information includes:
the target configuration information is used to configure frequency hopping transmission to be performed for the target uplink signal or target uplink channel, and the expected transmission information indicates that the target uplink signal or target uplink channel does not expect or does not support frequency hopping transmission.

The target configuration information matching the expected transmission information includes:
the target configuration information is used to configure frequency hopping transmission to be performed for the target uplink signal or target uplink channel, and the expected transmission information indicates that the target uplink signal or target uplink channel expects or supports frequency hopping transmission; or
the target configuration information is used to configure frequency hopping transmission not to be performed for the target uplink signal or target uplink channel.

In some embodiments, if the terminal feeds back the first indication information to the network-side device, the network-side device can reconfigure, according to the first indication information, configuration information matching the expected transmission information for the target uplink signal or target uplink channel.

Under this implementation, it is possible to perform frequency hopping transmission or not perform frequency hopping transmission for the target uplink signal or target uplink channel according to the target configuration information in the case that the target configuration information matches the expected transmission information, and in the case that the target configuration information does not match the expected transmission information, the terminal can transmit the target uplink signal or target uplink channel transmission according to the expected transmission information, or the terminal does not transmit the target uplink signal or target uplink channel, or the terminal feeds back the first indication information to the network-side device, where the first indication information is used to indicate that the target configuration information does not match the expected transmission information, to avoid the situation where transmission performance is reduced due to frequency hopping transmission being performed according to the target configuration information when the target uplink signal or target uplink channel does not expect or does not support frequency hopping transmission.

### Implementation two

The frequency domain mapping method of the target uplink signal mentioned above can be understood as: in the case that frequency hopping transmission is not performed for the target uplink signal or target uplink channel, the frequency domain position of its physical resource block (Physical Resource Block, PRB) is fixed, and thus the frequency domain position of the target uplink signal without frequency hopping transmission can be determined based on the first information; or, in the case that frequency hopping transmission is performed for the target uplink signal or target uplink channel, the frequency domain position of the first hop transmission is determined based on the first information.

For example, the UE determines the transmission PRB of PUCCH or the first starting PRB as RB_"BWP"^"offset"+[r_"PUCCH"/N_CS]; where N_CS is the total number of cyclic shifts (cyclic shift) configured for common PUCCH; [RB]_"BWP"^"offset" is the PRB offset relative to the minimum PRB of BWP; and r_"PUCCH" is the indicated value by DCI. That is, in this embodiment, the frequency domain mapping method of the target uplink signal is to calculate the operating frequency domain position or the frequency domain position of the first hop transmission of the target uplink signal through the formula: RB_"BWP"^"offset"+[r_"PUCCH"/N_CS].

For another example, if [r_"PUCCH"/8]=0, the UE determines the transmission PRB of PUCCH or the first starting PRB as [RB]_"BWP"^"offset"+[r_"PUCCH"/N_CS]; if [r_"PUCCH"/8]=1, the UE determines the transmission or the first starting PRB of PUCCH as [N_"BWP"^"size"-1-RB]_"BWP"^"offset"-[((r_"PUCCH"-8))/N_CS]; where N is the number of RBs in the frequency domain and N_"BWP"^"size" is the size of BWP. That is, in this embodiment, the frequency domain mapping method of the target uplink signal is: when [r_"PUCCH"/8]=0, calculating the operating frequency domain position or the frequency domain position of the first hop transmission of the target uplink signal according to the formula: [RBL"BWP "J\" offset" + lr_"PUCCH"/N_C Sj; when [r_"PUCCH"/8]=1, calculating the operating frequency domain position or the frequency domain position of the first hop transmission of the target uplink signal according to the formula: [N_"BWP"^"size"-1-RB]_"BWP"^"offset"-[((r_"PUCCH"-8))/N_CS].

Under this implementation, the terminal device can further determine the frequency domain mapping method of the target uplink signal or target uplink channel based on the first information, to determine the frequency domain position of the target uplink signal or target uplink channel, thereby improving the transmission performance of the target uplink signal or target uplink channel in the frequency domain.

As an optional implementation, in a case that target uplink channel is a dedicated PUCCH, the uplink transmission information determining method further includes:

The terminal obtains target configuration information for the dedicated PUCCH, where the target configuration information includes a hopping configuration indication.

In implementation, in the case that the target uplink channel is a dedicated PUCCH, if the network-side device configures frequency hopping transmission for the dedicated PUCCH, the target configuration information obtained by the terminal from the network-side device can include a hopping configuration indication. This hopping configuration indication is used to indicate that the dedicated PUCCH is to be transmitted with intra-slot frequency hopping or inter-slot frequency hopping.

It should be noted that in the case that the network-side device configures frequency hopping transmission not to be performed for the dedicated PUCCH, the target configuration information may not include the hopping configuration indication, which is not elaborated herein.

Optionally, in a case that the dedicated PUCCH is not configured with repetition, the hopping configuration indication includes: an intra-slot frequency hopping indication; or
in a case that the dedicated PUCCH is configured with repetition, the hopping configuration indication includes: an intra-slot frequency hopping indication or an inter-slot frequency hopping indication.

In implementation, the intra-slot (intra slot) frequency hopping indication is used to indicate that the dedicated PUCCH is to be transmitted with intra-slot frequency hopping, and the inter-slot (inter slot) frequency hopping indication is used to indicate that the dedicated PUCCH is to be transmitted with inter-slot frequency hopping. This works similarly to the related technology where, for PUCCH transmission without repetition, the intra-slot frequency hopping scheme can be configured through the RRC PUSCH; for PUCCH configured with repetition over N slots, the intra-slot frequency hopping scheme or inter-slot frequency hopping scheme can be configured through RRC, which is not further elaborated herein.

To facilitate the explanation of the uplink transmission information determining method provided by this application, six embodiments are listed as examples to illustrate the uplink transmission information determining method provided by this application.

### Embodiment 1

For PUSCH scheduled by RAR UL grant or DCI 0_0 scrambled with TC-RNTI, if at least one of the following second conditions is met:
operating on an unlicensed band/shared spectrum access band;
operating on an unlicensed band/shared access band, where an operating carrier contains more than one LBT sub-band or PRB set;
operating on an unlicensed band/shared access band, where an operating BWP contains more than one LBT sub-band or PRB set or the operation is on a non-initial UL BWP; and
a frequency domain bandwidth scheduled containing only one LBT sub-band or PRB set;
then the terminal expects the frequency hopping flag (Frequency hopping flag) in the RAR UL grant or DCI 0_0 to be "0", or does not expect the frequency hopping flag in the RAR UL grant or DCI 0_0 to be "1", or defaults to not performing frequency hopping transmission for the PUSCH (that is, ignoring the frequency hopping flag in the RAR UL grant).

### Embodiment 2

For Msg APUSCH, if at least one of the following second conditions is met:
operating on an unlicensed band/shared spectrum access band;
operating on an unlicensed band/shared access band, where an operating carrier contains more than one LBT sub-band or PRB set; and
operating on an unlicensed band/shared access band, where an operating BWP contains more than one LBT sub-band or PRB set or the operation is on a non-initial UL BWP;
then the terminal does not expect the network-side device to configure msgA-intraSlotFrequencyHopping for transmission with intra-slot frequency hopping, or defaults to not performing frequency hopping transmission for that PUSCH.

### Embodiment 3

For PUSCH indicated as Repetition Type A and scheduled by DCI 0_0/0_1/0_2, or Type 2 CG PUSCH activated by DCI 0_0/0_1/0_2, or Type 1 CG PUSCH configured by RRC (cg-nrofSlots and cg-nrofPUSCH-InSlot not configured), if at least one of following second conditions is met,
operating on an unlicensed band/shared spectrum access band;
operating on an unlicensed band/shared access band, where an operating carrier contains more than one LBT sub-band or PRB set; and
operating on an unlicensed band/shared access band, where an operating BWP contains more than one LBT sub-band or PRB set or the operation is on a non-initial UL BWP;
then the terminal does not expect or does not support frequency hopping transmission (including intra-slot frequency hopping and inter-slot frequency hopping).

### Embodiment 4

For PUSCH indicated as Repetition Type B and scheduled by DCI 0_0/0_1/0_2, or Type 2 CG PUSCH activated by DCI 0_0/0_1/0_2, or Type 1 CG PUSCH configured by RRC (cg-nrofSlots and cg-nrofPUSCH-InSlot not configured), if at least one of following second conditions is met,
operating on an unlicensed band/shared spectrum access band;
operating on an unlicensed band/shared access band, where an operating carrier contains more than one LBT sub-band or PRB set;
operating on an unlicensed band/shared access band, where an operating BWP contains more than one LBT sub-band or PRB set or the operation is on a non-initial UL BWP;
a frequency domain bandwidth scheduled or configured containing more than one LBT sub-band or PRB set; and
cg-transmission-Timer being configured;
then the terminal does not expect or does not support frequency hopping transmission (including inter-repetition hopping and inter-slot frequency hopping).

### Embodiment 5

For Type 2 CG PUSCH activated by DCI 0_0/0_1/0_2, or Type 1 CG PUSCH configured by RRC (cg-nrofSlots and cg-nrofPUSCH-InSlot configured), if at least one of following second conditions is met,
operating on an unlicensed band/shared spectrum access band;
operating on an unlicensed band/shared access band, where an operating carrier contains more than one LBT sub-band or PRB set;
operating on an unlicensed band/shared access band, where an operating BWP contains more than one LBT sub-band or PRB set;
a frequency domain bandwidth scheduled or configured containing more than one LBT sub-band or PRB set; and
cg-transmission-Timer being configured;
then the terminal does not expect or does not support frequency hopping transmission.

### Embodiment 6

For SRS operating with at least one of the following second conditions met:
transmitted on an unlicensed band/shared spectrum access band;
transmitted on an unlicensed band/shared access band, where an operating carrier contains more than one LBT sub-band or PRB set;
transmitted on an unlicensed band/shared access band, where an operating BWP contains more than one LBT sub-band or PRB set or the transmission is on a non-initial UL BWP; and
a frequency domain bandwidth scheduled or configured containing more than one LBT sub-band or PRB set;
then the terminal expects the relationship between the higher-layer configured parameters b_"hop" and B_"SRS" to be b_"hop"≥B_"SRS", or does not expect the relationship between b_"hop" and B_"SRS" to be b_"hop"<B_" SRS"; where, when b_"hop"≥B_"SRS", the terminal does not perform frequency hopping transmission for the SRS, and when b_"hop"<B_"SRS", the terminal performs frequency hopping transmission for the SRS.

In this embodiment of this application, before transmitting the target uplink signal or target uplink channel, the terminal obtains the first information related to the target uplink signal or target uplink channel; and in the case that the first information meets the preset condition, the terminal determines the expected transmission information, where the expected transmission information includes: information of expecting or supporting frequency hopping transmission for the target uplink signal or target uplink channel, or information of not expecting or not supporting frequency hopping transmission for the target uplink signal or target uplink channel. In this way, the terminal can autonomously determine whether to expect or support frequency hopping transmission for the target uplink signal or target uplink channel, and thus, in the case that the target uplink signal or target uplink channel does not support or does not expect frequency hopping transmission, frequency hopping transmission can be avoided, or the network-side can be requested to configure resource configuration information that matches the expected transmission information for the target uplink signal or target uplink channel, so that the terminal does not perform frequency hopping transmission for the target uplink signal or target uplink channel. This can solve the problem in related technologies where the terminal performs frequency hopping transmission according to the configuration of the network-side device, which causes the terminal to be unable to implement LBT when operating in an unlicensed band.

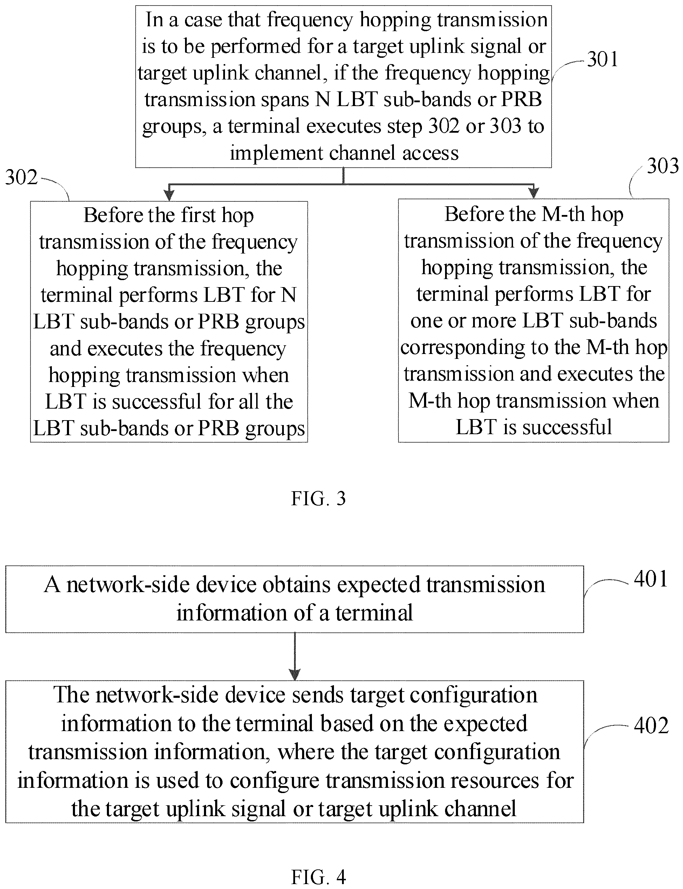

Refer to FIG. 3. An embodiment of this application provides an uplink transmission method, which is executed by a terminal. As shown in FIG. 3, the uplink transmission method can include the following steps.

Step 301. In a case that frequency hopping transmission is to be performed for a target uplink signal or target uplink channel, if the frequency hopping transmission spans N LBT sub-bands or PRB sets, the terminal executes step 302 or 303 to implement channel access, where N is an integer greater than 1.

Step 302. Before the first hop transmission of the frequency hopping transmission, the terminal performs LBT for N LBT sub-bands or PRB sets and executes the frequency hopping transmission when LBT is successful for all the LBT sub-bands or PRB sets.

Step 303. Before the M-th hop transmission of the frequency hopping transmission, the terminal performs LBT for one or more LBT sub-bands corresponding to the M-th hop transmission and executes the M-th hop transmission when LBT is successful, where M is an integer greater than or equal to 1.

### Implementation one

In the implementation where the terminal performs LBT for N LBT sub-bands or PRB sets before the first hop transmission of the frequency hopping transmission, and executes the frequency hopping transmission when LBT is successful for all the LBT sub-bands or PRB sets, the terminal performs LBT separately for all the LBT sub-bands or PRB sets involved in the frequency hopping transmission before starting of the frequency hopping transmission, and executes the frequency hopping transmission only when LBT is successful for all the LBT sub-bands or PRB sets.

In this way, it is possible to avoid transmission failure and resource waste caused by the inability to implement channel access when LBT fails for any one or at least two hops included in the frequency hopping transmission.

### Implementation two

In the implementation where the terminal performs LBT for one or more LBT sub-bands corresponding to the M-th hop transmission before the M-th hop transmission of the frequency hopping transmission, and executes the M-th hop transmission when LBT is successful, the terminal performs LBT for one or more LBT sub-bands corresponding to each hop transmission before executing each hop transmission, and executes the hop only when LBT is successful for at least part of the LBT sub-bands corresponding to that hop. That is, M is any integer ranging from 1 to X, where X represents the number of hops included in the frequency hopping transmission.

In this way, it is possible to avoid transmission failure and resource waste caused by the failure of LBT in any one hop during the frequency hopping transmission, which can reduce the waiting time for transmission during the LBT process, compared to the preceding implementation option where LBT is performed for all LBT sub-bands or PRB sets involved in the frequency hopping transmission before starting of the frequency hopping transmission.

Optionally, before the terminal performs frequency hopping transmission for the target uplink signal or target uplink channel, the uplink transmission method further includes:

The terminal determines, based on target information, to perform frequency hopping transmission for the target uplink signal or target uplink channel, where the target information includes expected transmission information that the terminal expects or supports frequency hopping transmission for the target uplink signal or target uplink channel, and the expected transmission information is determined using the uplink transmission information determining method as shown in FIG. 2.

In specific implementations, that the terminal determines, based on target information, to perform frequency hopping transmission for the target uplink signal or target uplink channel may include: the expected transmission information indicates expecting or supporting frequency hopping transmission for the target uplink signal or target uplink channel, and the network-side device configures frequency hopping transmission to be performed for the target uplink signal or target uplink channel.

The process of determining the expected transmission information is the same as the process of determining the expected transmission information in the uplink transmission information determining method shown in FIG. 2, which is not repeated herein.

In this embodiment of this application, a method is proposed for how the terminal performs LBT in the case that frequency hopping transmission is to be performed for the target uplink signal or target uplink channel, and the frequency hopping transmission spans N LBT sub-bands or PRB sets, so that the terminal can implement channel access when performing frequency hopping transmission for the target uplink signal or target uplink channel, even when the hopping transmission spans at least two LBT sub-bands or PRB sets and the target uplink signal or target uplink channel is transmitted or operates on an unlicensed band.

Refer to FIG. 4. An embodiment of this application provides an uplink transmission configuration method, which is executed by a network-side device. As shown in FIG. 4, the uplink transmission configuration method can include the following steps.

Step 401. The network-side device obtains expected transmission information of a terminal, where the expected transmission information includes: information of not expecting or not supporting frequency hopping transmission for a target uplink signal or target uplink channel, or information of expecting or supporting frequency hopping transmission for the target uplink signal or target uplink channel.

In specific implementations, the network-side device can obtain a preset condition from a communication protocol and first information related to the target uplink signal or target uplink channel, and determine the expected transmission information of the terminal based on the first information and the preset condition, or directly receive the expected transmission information from the terminal. For ease of explanation, the following embodiments assume that the preset condition is written into the communication protocol so that the network-side device can determine the expected transmission information of the terminal based on the first information related to the target uplink signal or target uplink channel and the preset condition, which does not constitute a specific limitation.

Additionally, in specific implementations, the network-side device can obtain the expected transmission information before the terminal transmits the target uplink signal or target uplink channel, to configure transmission resources matching the expected transmission information for transmission of the target uplink signal or target uplink channel.

The preset condition is the same as the preset condition in the method embodiment shown in FIG. 2, which is not elaborated here.

Step 402. The network-side device sends target configuration information to the terminal based on the expected transmission information, where the target configuration information is used to configure transmission resources for the target uplink signal or target uplink channel.

In implementation, sending the target configuration information to the terminal based on the expected transmission information can be understood as: configuring frequency hopping transmission to be performed for the target uplink signal or target uplink channel in a case that the expected transmission information indicates that the target uplink signal or target uplink channel expects or supports frequency hopping transmission; and configuring frequency hopping transmission not to be performed for the target uplink signal or target uplink channel in a case that the expected transmission information indicates that the target uplink signal or target uplink channel does not expect or does not support hopping transmission.

Optionally, the network-side device obtaining the expected transmission information of the terminal includes:
obtaining, by the network-side device, first information related to the target uplink signal or target uplink channel; and
determining, by the network-side device, the expected transmission information of the terminal in a case that the first information meets a preset condition.

Optionally, the first information includes at least one of the following:
a type of a band on which the target uplink signal or target uplink channel is transmitted or operates, where the type of the band includes licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, where the type of the target uplink channel includes common channel or dedicated channel;
a value of an intra-cell guard band configuration for a carrier on which the target uplink signal is transmitted or operates; and
a configured grant related parameter.

Optionally, the preset condition includes a first condition and/or a second condition, where the first condition includes at least one of the following:
transmitted or operating on a licensed band/non-shared spectrum access band;
transmitted or operating on an unlicensed band/shared spectrum access band, where the operating carrier contains only one LBT sub-band or PRB set;
transmitted or operating on an unlicensed band/shared access band, where an operating BWP contains only one LBT sub-band or PRB set or the transmission or operation is on an initial uplink bandwidth part (initial UL BWP);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition includes at least one of the following:
   transmitted or operating on an unlicensed band/shared spectrum access band;
   transmitted or operating on an unlicensed band/shared access band, where an operating carrier contains more than one LBT sub-band or PRB set;
   transmitted or operating on an unlicensed band/shared access band, where an operating BWP contains more than one LBT sub-band or PRB set or the transmission or operation is on a non-initial UL BWP;
   a frequency domain bandwidth scheduled or configured containing more than one LBT sub-band or PRB set;
   the target uplink channel being a PUCCH, where the PUCCH is configured with interlaced transmission;
   a value of an intra-cell guard band configuration for a carrier on which the target uplink signal is transmitted or operates being not equal to 0; and
   a configured grant retransmission timer being configured.

Optionally, in a case that the first information meets the first condition, the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
   or,
in a case that the first information meets the second condition, the expected transmission information includes at least one of the following:
   expecting or supporting frequency hopping transmission for the target uplink signal or target uplink channel;
   expecting the network-side device to configure the second configuration information, or not expecting the network-side device to configure the first configuration information; and
   defaulting to performing frequency hopping transmission for the target uplink signal or target uplink channel.

Optionally, in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

Optionally, in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

Optionally, the target uplink channel includes at least one of a physical uplink control channel PUCCH and a physical uplink shared channel PUSCH; or the target uplink signal includes a sounding reference signal SRS or a signal transmitted through the target uplink channel.

Optionally, in a case that the target uplink channel is a dedicated PUCCH, the target configuration information includes a hopping configuration indication.

Optionally, in a case that the dedicated PUCCH is not configured with repetition, the hopping configuration indication includes: an intra-slot frequency hopping indication; or
in a case that the dedicated PUCCH is configured with repetition, the hopping configuration indication includes: an intra-slot frequency hopping indication or an inter-slot frequency hopping indication.

Optionally, after the network-side device sends the target configuration information to the terminal based on the expected transmission information, the uplink transmission configuration method further includes:
obtaining, by the network-side device, first indication information from the terminal, where the first indication information is used to indicate that the target configuration information does not match the expected transmission information; and
reconfiguring, by the network-side device, transmission resources for the target uplink signal or target uplink channel based on the first indication information.

This implementation corresponds to the implementation option in the method embodiment shown in FIG. 2 where in the case that the target configuration information does not match the expected transmission information, the terminal feeds back the first indication information to the network-side device, achieving the same beneficial effects. To avoid repetition, it is not elaborated herein again.

In this embodiment of this application, the network-side device can configure the transmission resources for frequency hopping or non-frequency hopping transmission of the target uplink signal or target uplink channel before the terminal transmits the target uplink signal or target uplink channel, based on the terminal's expected transmission information for the target uplink signal or target uplink channel. This allows the terminal not to perform frequency hopping transmission for the target uplink signal or target uplink channel in cases where the target uplink signal or target uplink channel does not support or does not expect frequency hopping transmission, solving the problem in related technologies where the terminal performs frequency hopping transmission according to the configuration of the network-side device, which causes the terminal to be unable to implement LBT when operating in an unlicensed band.

It should be noted that the uplink transmission information determining method provided in the embodiments of this application can be executed by an uplink transmission information determining apparatus, or alternatively, by a control module in the uplink transmission information determining apparatus that is used to execute the uplink transmission information determining method. In embodiments of this application, the uplink transmission information determining apparatus executing the uplink transmission information determining method is used as an example to illustrate the uplink transmission information determining apparatus provided by an embodiment of this application.

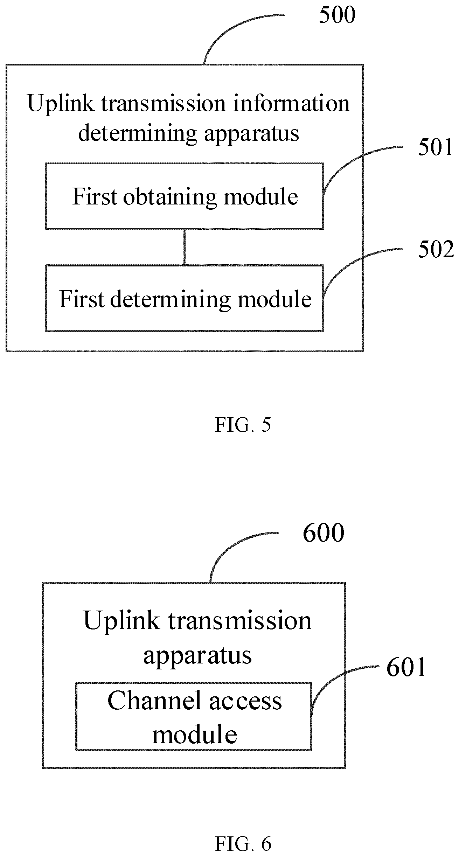

Refer to FIG. 5. An embodiment of this application provides an uplink transmission information determining apparatus, which can be applied to a terminal. As shown in FIG. 5, the uplink transmission information determining apparatus 500 can include the following modules:
a first obtaining module 501, configured to, before transmission of a target uplink signal or target uplink channel, obtain first information related to the target uplink signal or target uplink channel; and
a first determining module 502, configured to determine expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel.

Optionally, the first information includes at least one of the following:
a type of a band on which the target uplink signal or target uplink channel is transmitted or operates, where the type of the band includes licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, where the type of the target uplink channel includes common channel or dedicated channel;
a value of an intra-cell guard band configuration for a carrier on which the target uplink signal is transmitted or operates; and
a configured grant related parameter.

Optionally, the target uplink channel includes at least one of a physical uplink control channel PUCCH and a physical uplink shared channel PUSCH; or the target uplink signal includes a sounding reference signal SRS or a signal transmitted through the target uplink channel.

The preset condition includes a first condition and/or a second condition, where the first condition includes at least one of the following:
transmitted or operating on a licensed band/non-shared spectrum access band;
transmitted or operating on an unlicensed band/shared spectrum access band, where the operating carrier contains only one LBT sub-band or PRB set;
transmitted or operating on an unlicensed band/shared access band, where an operating BWP contains only one LBT sub-band or PRB set or the transmission or operation is on an initial uplink bandwidth part (initial UL BWP);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition includes at least one of the following:
   transmitted or operating on an unlicensed band/shared spectrum access band;
   transmitted or operating on an unlicensed band/shared access band, where an operating carrier contains more than one LBT sub-band or PRB set;
   transmitted or operating on an unlicensed band/shared access band, where an operating BWP contains more than one LBT sub-band or PRB set or the transmission or operation is on a non-initial UL BWP;
   a frequency domain bandwidth scheduled or configured containing more than one LBT sub-band or PRB set;
   the target uplink channel being a PUCCH, where the PUCCH is configured with interlaced transmission;
   a value of an intra-cell guard band configuration for a carrier on which the target uplink signal is transmitted or operates being not equal to 0; and
   a configured grant retransmission timer being configured.

Optionally, in a case that the first information meets the first condition, the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
   or,
in a case that the first information meets the second condition, the expected transmission information includes at least one of the following:
   expecting or supporting frequency hopping transmission for the target uplink signal or target uplink channel;
   expecting the network-side device to configure the second configuration information, or not expecting the network-side device to configure the first configuration information; and
   defaulting to performing frequency hopping transmission for the target uplink signal or target uplink channel.

Optionally, in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

Optionally, in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

Optionally, the uplink transmission information determining apparatus 500 further includes:
a second determining module, configure to determine second information based on the expected transmission information, where the second information includes at least one of the following:
   whether target configuration information by the network-side device for transmission of the target uplink signal or target uplink channel matches the expected transmission information; and
   a frequency domain mapping method of the target uplink signal.

Optionally, the uplink transmission information determining apparatus 500 further includes:
a first transmission module, configured to transmit the target uplink signal or target uplink channel according to the target configuration information in a case that the target configuration information matches the expected transmission information; and
a second transmission module, configured to, in a case that the target configuration information does not match the expected transmission information, ignore the target configuration information and transmit the target uplink signal or target uplink channel according to the expected transmission information, or drop transmission of the target uplink signal or target uplink channel, or feed back first indication information to the network-side device, where the first indication information is used to indicate that the target configuration information does not match the expected transmission information.

Here, the target configuration information not matching the expected transmission information includes:
the target configuration information is used to configure frequency hopping transmission to be performed for the target uplink signal or target uplink channel, and the expected transmission information indicates that the target uplink signal or target uplink channel does not expect or does not support frequency hopping transmission.

The target configuration information matching the expected transmission information includes:
the target configuration information is used to configure frequency hopping transmission to be performed for the target uplink signal or target uplink channel, and the expected transmission information indicates that the target uplink signal or target uplink channel expects or supports frequency hopping transmission; or
the target configuration information is used to configure frequency hopping transmission not to be performed for the target uplink signal or target uplink channel.

Optionally, in a case that target uplink channel is a dedicated PUCCH, the uplink transmission information determining apparatus 500 further includes:
a third obtaining module, configured to obtain target configuration information for the dedicated PUCCH, where the target configuration information includes a hopping configuration indication.

Optionally, in a case that the dedicated PUCCH is not configured with repetition, the hopping configuration indication includes: an intra-slot frequency hopping indication; or
in a case that the dedicated PUCCH is configured with repetition, the hopping configuration indication includes: an intra-slot frequency hopping indication or an inter-slot frequency hopping indication.

The uplink transmission information determining apparatus 500 provided in this embodiment of this application can implement the processes implemented in the method embodiment shown in FIG. 2 with the same technical effects achieved. To avoid repetition, details are not described herein again.

It should be noted that the uplink transmission method provided in the embodiments of this application can be executed by an uplink transmission apparatus, or alternatively, by a control module in the uplink transmission apparatus that is used to execute the uplink transmission method. In the embodiments of this application, the uplink transmission apparatus executing the uplink transmission method is used as an example to illustrate the uplink transmission apparatus provided in an embodiment of this application.

Refer to FIG. 6. An embodiment of this application provides an uplink transmission apparatus, which can be applied to a terminal. As shown in FIG. 6, the uplink transmission apparatus 600 can include the following modules:
a channel access module 601, configured for the terminal to implement channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; where
N is an integer greater than 1 and M is an integer greater than or equal to 1.

Optionally, the uplink transmission apparatus 600 further includes:
a third determining module, configured to determine, based on target information, to perform frequency hopping transmission for the target uplink signal or target uplink channel, where the target information includes expected transmission information that the terminal expects or supports frequency hopping transmission for the target uplink signal or target uplink channel, and the terminal further includes any uplink transmission information determining apparatus of the embodiment shown in FIG. 5, and the expected transmission information is determined by the uplink transmission information determining apparatus.

The uplink transmission apparatus 600 provided in this embodiment of this application can implement the processes implemented in the method embodiment shown in FIG. 3, with the same technical effects achieved. To avoid repetition, details are not repeated herein.

The uplink transmission information determining apparatus 500 and the uplink transmission apparatus 600 in the embodiments of this application may be apparatuses or electronic devices equipment with an operating system, or a part, integrated circuit, or chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

It should be noted that the uplink transmission configuration method provided in the embodiments of this application can be executed by an uplink transmission configuration apparatus, or alternatively, by a control module in the uplink transmission configuration apparatus that is used to execute the uplink transmission configuration method. In the embodiments of this application, the uplink transmission configuration apparatus executing the uplink transmission configuration method is used as an example to illustrate the uplink transmission configuration apparatus provided in an embodiment of this application.

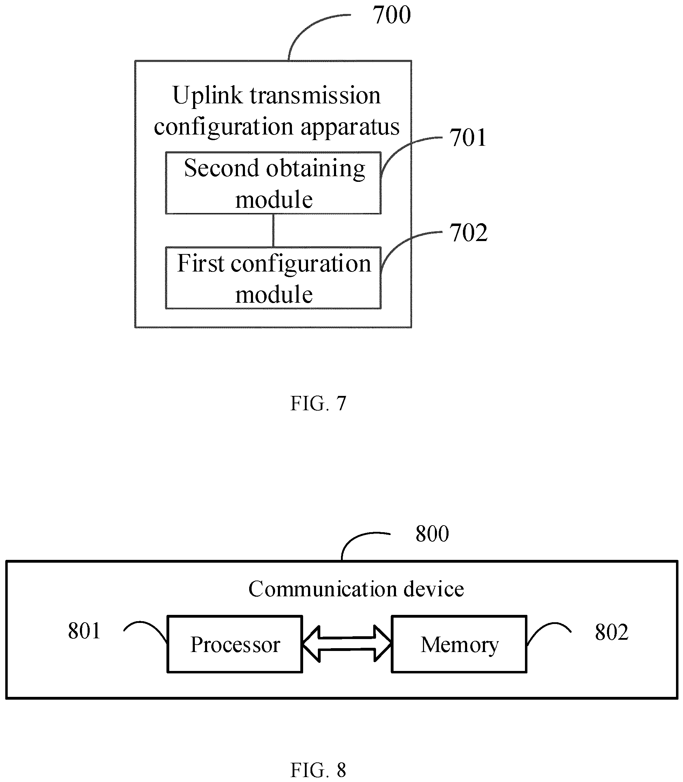

Refer to FIG. 7. An embodiment of this application provides an uplink transmission configuration apparatus 700, which can be applied to a network-side device. As shown in FIG. 7, the uplink transmission configuration apparatus 700 can include the following modules:
a second obtaining module 701, configured to obtain expected transmission information of a terminal, where the expected transmission information includes: information of not expecting or not supporting frequency hopping transmission for a target uplink signal or target uplink channel, or information of expecting or supporting frequency hopping transmission for the target uplink signal or target uplink channel; and
a first configuration module 702, configured to send target configuration information to the terminal based on the expected transmission information, where the target configuration information is used to configure transmission resources for the target uplink signal or target uplink channel.

Optionally, the second obtaining module 701 includes:
an obtaining unit, configured to obtain first information related to the target uplink signal or target uplink channel; and
a determining unit, configured to determine the expected transmission information of the terminal in a case that the first information meets a preset condition.

Optionally, the first information includes at least one of the following:
a type of a band on which the target uplink signal or target uplink channel is transmitted or operates, where the type of the band includes licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, where the type of the target uplink channel includes common channel or dedicated channel;
a value of an intra-cell guard band configuration for a carrier on which the target uplink signal is transmitted or operates; and
a configured grant related parameter.

Optionally, the preset condition includes a first condition and/or a second condition, where the first condition includes at least one of the following:
transmitted or operating on a licensed band/non-shared spectrum access band;
transmitted or operating on an unlicensed band/shared spectrum access band, where the operating carrier contains only one LBT sub-band or PRB set;
transmitted or operating on an unlicensed band/shared access band, where an operating BWP contains only one LBT sub-band or PRB set or the transmission or operation is on an initial uplink bandwidth part (initial UL BWP);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition includes at least one of the following:
   transmitted or operating on an unlicensed band/shared spectrum access band;
   transmitted or operating on an unlicensed band/shared access band, where an operating carrier contains more than one LBT sub-band or PRB set;
   transmitted or operating on an unlicensed band/shared access band, where an operating BWP contains more than one LBT sub-band or PRB set or the transmission or operation is on a non-initial UL BWP;
   a frequency domain bandwidth scheduled or configured containing more than one LBT sub-band or PRB set;
   the target uplink channel being a PUCCH, where the PUCCH is configured with interlaced transmission;
   a value of an intra-cell guard band configuration for a carrier on which the target uplink signal is transmitted or operates being not equal to 0; and
   a configured grant retransmission timer being configured.

Optionally, in a case that the first information meets the first condition, the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
   or,
in a case that the first information meets the second condition, the expected transmission information includes at least one of the following:
   expecting or supporting frequency hopping transmission for the target uplink signal or target uplink channel;
   expecting the network-side device to configure the second configuration information, or not expecting the network-side device to configure the first configuration information; and
   defaulting to performing frequency hopping transmission for the target uplink signal or target uplink channel.

Optionally, in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

Optionally, in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

Optionally, the target uplink channel includes at least one of a physical uplink control channel PUCCH and a physical uplink shared channel PUSCH; or the target uplink signal includes a sounding reference signal SRS or a signal transmitted through the target uplink channel.

Optionally, in a case that the target uplink channel is a dedicated PUCCH, the target configuration information includes a hopping configuration indication.

Optionally, in a case that the dedicated PUCCH is not configured with repetition, the hopping configuration indication includes: an intra-slot frequency hopping indication; or
in a case that the dedicated PUCCH is configured with repetition, the hopping configuration indication includes: an intra-slot frequency hopping indication or an inter-slot frequency hopping indication.

Optionally, the uplink transmission configuration apparatus 700 further includes:
a receiving module, configured to receive first indication information from the terminal, where the first indication information is used to indicate that the target configuration information does not match the expected transmission information; and
a second configuration module, configured to reconfigure transmission resources for the target uplink signal or target uplink channel based on the first indication information.

The uplink transmission configuration apparatus 700 provided in this embodiment of this application can implement the processes implemented in the method embodiment shown in FIG. 4, with the same technical effect achieved. To avoid repetition, details are not described herein again.

Optionally, as shown in FIG. 8, an embodiment of this application further provides a communication device 800 including a processor 801, a memory 802, and a program or instructions stored in the memory 802 and capable of running on the processor 801. For example, in a case that the communication device 800 is a terminal, when the program or instructions are executed by the processor 801, the processes of the method embodiment shown in FIG. 2 or 3 are implemented, with the same technical effects achieved. In a case that the communication device 800 is a network-side device, when the program or instructions are executed by the processor 801, the processes of the method embodiment shown in FIG. 4 are implemented, with the same technical effects achieved. To avoid repetition, details are not described herein again.

An embodiment of this application further provides a terminal including a processor and a communication interface. The processor is configured to obtain first information related to a target uplink signal or target uplink channel before transmission of the target uplink signal or target uplink channel, and determine expected transmission information in a case that the first information meets a preset condition, where the expected transmission information includes: information of expecting or supporting frequency hopping transmission for the target uplink signal or target uplink channel, or information of not expecting or not supporting frequency hopping transmission for the target uplink signal or target uplink channel;
and/or
the communication interface is configured to implement channel access using any one of the following manners, in a case that frequency hopping transmission is to be performed for the target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; where
N is an integer greater than 1 and M is an integer greater than or equal to 1.

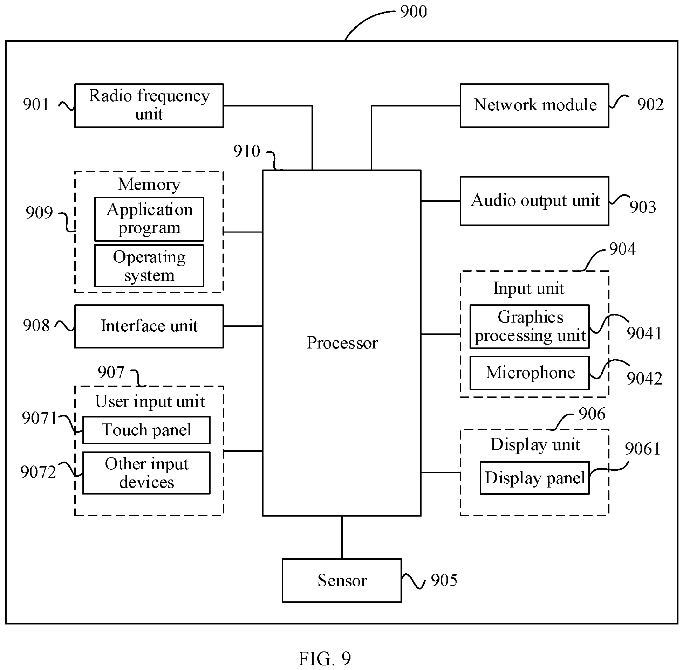

This terminal embodiment corresponds to the foregoing method embodiment on the terminal side. All processes and implementations in the foregoing method embodiment can be applicable to this terminal embodiment, with the same technical effect achieved. Specifically, FIG. 9 is a schematic diagram of a hardware structure of a terminal for implementing embodiments of this application.

The terminal 900 includes but is not limited to at least part of these components: a radio frequency unit 901, a network module 902, an audio output unit 903, an input unit 904, a sensor 905, a display unit 906, a user input unit 907, an interface unit 908, a memory 909, a processor 910, and the like.

It can be understood by those skilled in the art that the terminal 900 may further include a power supply (for example, battery) supplying power to the components. The power supply may be logically connected to the processor 910 via a power management system, so that functions such as charge management, discharge management, and power consumption management are implemented via the power management system. The structure of the terminal shown in FIG. 9 does not constitute any limitation on the terminal, and the terminal may include more or fewer components than shown in the figure, or combine some of the components, or have different arrangements of the components. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061. The display panel 9061 may be configured in the form of a liquid crystal display, an organic light-emitting diode display, or the like. The user input unit 907 includes a touch panel 9071 and other input devices 9072. The touch panel 9071 is also referred to as a touchscreen. The touch panel 9071 may include two parts: a touch detection apparatus and a touch controller. Specifically, the other input devices 9072 may include but are not limited to a physical keyboard, a function button (for example, volume control button or on/off button), a trackball, a mouse, and a joystick. Details are not described herein.

In this embodiment of this application, the radio frequency unit 901 transmits downlink data received from a network-side device to the processor 910 for processing, and in addition, transmits uplink data to the network-side device. Generally, the radio frequency unit 901 includes but is not limited to an antenna, at least one amplifier, a transceiver, a coupler, a low noise amplifier, and a duplexer.

The memory 909 may be configured to store software programs or instructions and various data. The memory 909 may include a program or instruction storage area and a data storage area. The program or instruction storage area may store an operating system, an application program or instructions required by at least one function (for example, sound play function or image play function), and the like. In addition, the memory 909 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 910 may include one or more processing units. Optionally, the processor 910 may integrate an application processor and a modem processor. This application processor primarily processes the operating system, user interface, application programs or instructions, and the like. The modem processor primarily processes radio communication, for example, being a baseband processor. It can be understood that the modem processor may alternatively be not integrated in the processor 910.

In a first implementation, the radio frequency unit 901 is configured to, before transmission of a target uplink signal or target uplink channel, obtain first information related to the target uplink signal or target uplink channel; and
the processor 910 is configured to determine expected transmission information in a case that the first information meets a preset condition, where the expected transmission information includes: information of expecting or supporting frequency hopping transmission for the target uplink signal or target uplink channel, information of not expecting or not supporting frequency hopping transmission for the target uplink signal or target uplink channel.

Optionally, the first information includes at least one of the following:
a type of a band on which the target uplink signal or target uplink channel is transmitted or operates, where the type of the band includes licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, where the type of the target uplink channel includes common channel or dedicated channel;
a value of an intra-cell guard band configuration for a carrier on which the target uplink signal is transmitted or operates; and
a configured grant related parameter.

Optionally, the target uplink channel includes at least one of a physical uplink control channel PUCCH and a physical uplink shared channel PUSCH; or the target uplink signal includes a sounding reference signal SRS or a signal transmitted through the target uplink channel.

Optionally, the preset condition includes a first condition and/or a second condition, where the first condition includes at least one of the following:
transmitted or operating on a licensed band/non-shared spectrum access band;
transmitted or operating on an unlicensed band/shared spectrum access band, where the operating carrier contains only one LBT sub-band or PRB set;
transmitted or operating on an unlicensed band/shared access band, where an operating BWP contains only one LBT sub-band or PRB set or the transmission or operation is on an initial uplink bandwidth part (initial UL BWP);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition includes at least one of the following:
   transmitted or operating on an unlicensed band/shared spectrum access band;
   transmitted or operating on an unlicensed band/shared access band, where an operating carrier contains more than one LBT sub-band or PRB set;
   transmitted or operating on an unlicensed band/shared access band, where an operating BWP contains more than one LBT sub-band or PRB set or the transmission or operation is on a non-initial UL BWP;
   a frequency domain bandwidth scheduled or configured containing more than one LBT sub-band or PRB set;
   the target uplink channel being a PUCCH, where the PUCCH is configured with interlaced transmission;
   a value of an intra-cell guard band configuration for a carrier on which the target uplink signal is transmitted or operates being not equal to 0; and
   a configured grant retransmission timer being configured.

Optionally, in a case that the first information meets the first condition, the expected transmission information includes at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
   or,
in a case that the first information meets the second condition, the expected transmission information includes at least one of the following:
   expecting or supporting frequency hopping transmission for the target uplink signal or target uplink channel;
   expecting the network-side device to configure the second configuration information, or not expecting the network-side device to configure the first configuration information; and
   defaulting to performing frequency hopping transmission for the target uplink signal or target uplink channel.

Optionally, in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

Optionally, in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

Optionally, after the processor 910 determines the expected transmission information, the processor 910 is further configured to:
determine second information based on the expected transmission information, where the second information includes at least one of the following:
whether target configuration information by the network-side device for transmission of the target uplink signal or target uplink channel matches the expected transmission information; and
a frequency domain mapping method of the target uplink signal.

Optionally, after the processor 910 determines whether the target configuration information by the network-side device for transmission of the target uplink signal or target uplink channel matches the expected transmission information, the radio frequency unit 901 is configured to:
in a case that the target configuration information matches the expected transmission information, transmit the target uplink signal or target uplink channel according to the target configuration information; and
in a case that the target configuration information does not match the expected transmission information, ignore the target configuration information and transmit the target uplink signal or target uplink channel according to the expected transmission information, or drop transmission of the target uplink signal or target uplink channel, or feed back first indication information to the network-side device, where the first indication information is used to indicate that the target configuration information does not match the expected transmission information.

Here, the target configuration information not matching the expected transmission information includes:
the target configuration information is used to configure frequency hopping transmission to be performed for the target uplink signal or target uplink channel, and the expected transmission information indicates that the target uplink signal or target uplink channel does not expect or does not support frequency hopping transmission.

The target configuration information matching the expected transmission information includes:
the target configuration information is used to configure frequency hopping transmission to be performed for the target uplink signal or target uplink channel, and the expected transmission information indicates that the target uplink signal or target uplink channel expects or supports frequency hopping transmission; or
the target configuration information is used to configure frequency hopping transmission not to be performed for the target uplink signal or target uplink channel.

Optionally, in a case that target uplink channel is a dedicated PUCCH, the radio frequency unit 901 is further configured to:
obtain target configuration information for the dedicated PUCCH, where the target configuration information includes a hopping configuration indication.

Optionally, in a case that the dedicated PUCCH is not configured with repetition, the hopping configuration indication includes: an intra-slot frequency hopping indication; or
in a case that the dedicated PUCCH is configured with repetition, the hopping configuration indication includes: an intra-slot frequency hopping indication or an inter-slot frequency hopping indication.

Under this implementation, the terminal 900 can execute the processes executed by the modules in the uplink transmission information determining apparatus shown in FIG. 5 with the same beneficial effects achieved. To avoid repetition, details are not described herein again.

In a first implementation, the radio frequency unit 901 is configured to implement channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; where
N is an integer greater than 1 and M is an integer greater than or equal to 1.

Optionally, before the radio frequency unit 901 performs frequency hopping transmission for the target uplink signal or target uplink channel, the processor 910 is configured to:
determine, based on target information, to perform frequency hopping transmission for the target uplink signal or target uplink channel, where the target information includes expected transmission information that the terminal expects or supports frequency hopping transmission for the target uplink signal or target uplink channel, and the expected transmission information is determined using any uplink transmission information determining method in the method embodiment shown in FIG. 2.

Under this implementation, the terminal 900 can execute the processes executed by the modules in the uplink transmission apparatus shown in FIG. 6 with the same beneficial effects achieved. To avoid repetition, details are not described herein again.

An embodiment of this application further provides a network-side device including a processor and a communication interface. The communication interface is configured to obtain expected transmission information of a terminal, where the expected transmission information includes: information of not expecting or not supporting frequency hopping transmission for a target uplink signal or target uplink channel, or information of expecting or supporting frequency hopping transmission for the target uplink signal or target uplink; and
the processor is configured to generate target configuration information based on the expected transmission information, and the communication interface is further configured to send the target configuration information to the terminal, where the target configuration information is used to configure transmission resources for the target uplink signal or target uplink channel.

This network-side device embodiment corresponds to the foregoing network-side device method embodiment. All processes and implementations in the foregoing method embodiment can be applicable to this network-side device embodiment, with the same technical effect achieved.

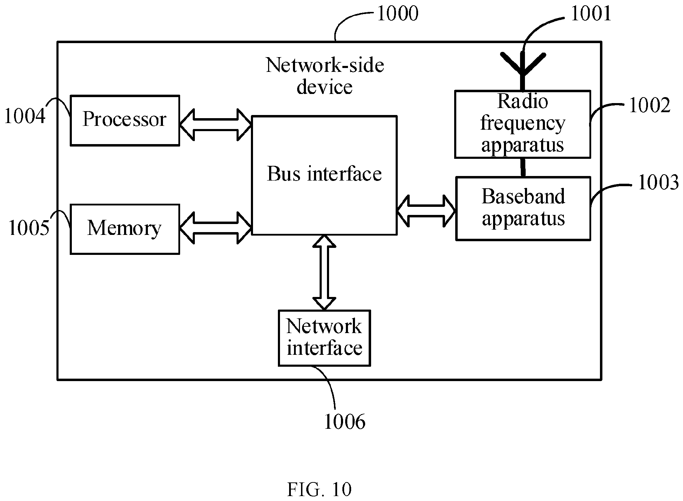

Specifically, an embodiment of this application further provides a network-side device. As shown in FIG. 10, the network-side device 1000 includes an antenna 1001, a radio frequency apparatus 1002, and a baseband apparatus 1003. The antenna 1001 is connected to the radio frequency apparatus 1002. Uplink, the radio frequency apparatus 1002 receives information through the antenna 1001, and sends the received information to the baseband apparatus 1003 for processing. Downlink, the baseband apparatus 1003 processes to-be-sent information, and sends the information to the radio frequency apparatus 1002; and the radio frequency apparatus 1002 processes the received information and then sends the information out through the antenna 1001.

The band processing apparatus may be located in the baseband apparatus 1003. The method performed by the network-side device in the foregoing embodiment may be implemented on the baseband apparatus 1003, and the baseband apparatus 1003 includes a processor 1004 and a memory 1005.

The baseband apparatus 1003 may include, for example, at least one baseband processing unit, where a plurality of chips are disposed on the baseband processing unit. As shown in FIG. 10, one of the chips is, for example, the processor 1004, and connected to the memory 1005, to invoke the program in the memory 1005 to perform the operations of the network device shown in the foregoing method embodiment.

The baseband apparatus 1003 may further include a network interface 1006, configured to exchange information with the radio frequency apparatus 1002, where the interface is, for example, a common public radio interface (Common Public Radio Interface, CPRI).

Specifically, the network-side device in this embodiment of the present invention further includes: instructions or a program stored in the memory 1005 and capable of running on the processor 1004. The processor 1004 invokes the instructions or program in the memory 1005 to execute the method executed by the modules shown in FIG. 7, with the same technical effects achieved. To avoid repetition, details are not described herein again.

An embodiment of this application further provides a readable storage medium. The readable storage medium stores a program or instructions. When the program or instructions are executed by a processor, the processes of the method embodiment shown in FIG. 2, 3, or 4 are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiment shown in FIG. 2, 3, or 4, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program or program product. The computer program or program product is stored in a non-transient storage medium, and the computer program or program product is executed by at least one processor to implement the steps of the method shown in FIG. 2, 3, or 4, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An uplink transmission information determining method, comprising:
before transmitting a target uplink signal or target uplink channel, obtaining, by a terminal, first information related to the target uplink signal or target uplink channel; and
determining, by the terminal, expected transmission information in a case that the first information meets a preset condition, wherein the expected transmission information comprises: information of expecting or supporting frequency hopping transmission for the target uplink signal or target uplink channel, or information of not expecting or not supporting frequency hopping transmission for the target uplink signal or target uplink channel.

2. The method according to claim 1, wherein the first information comprises at least one of the following:
a type of a band on which the target uplink signal or target uplink channel is transmitted or operates, wherein the type of the band comprises licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part BWP on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, wherein the type of the target uplink channel comprises common channel or dedicated channel;
a value of an intra-cell guard band configuration for a carrier on which the target uplink signal is transmitted or operates; and
a configured grant related parameter.

3. The method according to claim 1 or 2, wherein the target uplink channel comprises at least one of a physical uplink control channel PUCCH and a physical uplink shared channel PUSCH; or the target uplink signal comprises a sounding reference signal SRS or a signal transmitted through the target uplink channel.

4. The method according to any one of claims 1 to 3, wherein the preset condition comprises a first condition and/or a second condition; wherein
the first condition comprises at least one of the following:
transmitted or operating on a licensed band/non-shared spectrum access band;
transmitted or operating on an unlicensed band/shared spectrum access band, wherein the operating carrier contains only one LBT sub-band or PRB set;
transmitted or operating on an unlicensed band/shared spectrum access band, wherein an operating BWP contains only one LBT sub-band or PRB set or the transmission or operation is on an initial uplink bandwidth part (initial UL bandwidth);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition comprises at least one of the following:
transmitted or operating on an unlicensed band/shared spectrum access band;
transmitted or operating on an unlicensed band/shared access band, wherein an operating carrier contains more than one LBT sub-band or PRB set;
transmitted or operating on an unlicensed band/shared access band, wherein an operating BWP contains more than one LBT sub-band or PRB set or the transmission or operation is on a non-initial UL BWP;
a frequency domain bandwidth scheduled or configured containing more than one LBT sub-band or PRB set;
the target uplink channel being a PUCCH, wherein the PUCCH is configured with interlaced transmission;
a value of an intra-cell guard band configuration for a carrier on which the target uplink signal is transmitted or operates being not equal to 0; and
a configured grant retransmission timer being configured.

5. The method according to claim 4, wherein in a case that the first information meets the first condition, the expected transmission information comprises at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
or
in a case that the first information meets the second condition, the expected transmission information comprises at least one of the following:
expecting or supporting frequency hopping transmission for the target uplink signal or target uplink channel;
expecting the network-side device to configure the second configuration information, or not expecting the network-side device to configure the first configuration information; and
defaulting to performing frequency hopping transmission for the target uplink signal or target uplink channel.

6. The method according to claim 4, wherein
in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

7. The method according to claim 4, wherein
in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

8. The method according to any one of claims 1 to 7, wherein after the determining, by the terminal, expected transmission information, the method further comprises:
determining, by the terminal, second information based on the expected transmission information, wherein the second information comprises at least one of the following:
whether target configuration information by the network-side device for transmission of the target uplink signal or target uplink channel matches the expected transmission information; and
a frequency domain mapping method of the target uplink signal.

9. The method according to claim 8, wherein after the terminal determines whether the target configuration information by the network-side device for transmission of the target uplink signal or target uplink channel matches the expected transmission information, the method further comprises:
in a case that the target configuration information matches the expected transmission information, transmitting, by the terminal, the target uplink signal or target uplink channel according to the target configuration information; and
in a case that the target configuration information does not match the expected transmission information, ignoring, by the terminal, the target configuration information and transmitting the target uplink signal or target uplink channel according to the expected transmission information, or dropping, by the terminal, transmission of the target uplink signal or target uplink channel, or feeding back, by the terminal, first indication information to the network-side device, wherein the first indication information is used to indicate that the target configuration information does not match the expected transmission information; wherein
the target configuration information not matching the expected transmission information comprises:
the target configuration information is used to configure frequency hopping transmission to be performed for the target uplink signal or target uplink channel, and the expected transmission information indicates that the target uplink signal or target uplink channel does not expect or does not support frequency hopping transmission; and
the target configuration information matching the expected transmission information comprises:
the target configuration information is used to configure frequency hopping transmission to be performed for the target uplink signal or target uplink channel, and the expected transmission information indicates that the target uplink signal or target uplink channel expects or supports frequency hopping transmission; or
the target configuration information is used to configure frequency hopping transmission not to be performed for the target uplink signal or target uplink channel.

10. The method according to any one of claims 1 to 9, wherein in a case that the target uplink channel is a dedicated PUCCH, the method further comprises:
obtaining, by the terminal, target configuration information for the dedicated PUCCH, wherein the target configuration information comprises a hopping configuration indication.

11. The method according to claim 10, wherein, in a case that the dedicated PUCCH is not configured with repetition, the hopping configuration indication comprises an intra-slot frequency hopping indication; or
in a case that the dedicated PUCCH is configured with repetition, the hopping configuration indication comprises an intra-slot frequency hopping indication or an inter-slot frequency hopping indication.

12. An uplink transmission information determining apparatus, applied to a terminal, wherein the apparatus comprises:
a first obtaining module, configured to, before transmission of a target uplink signal or target uplink channel, obtain first information related to the target uplink signal or target uplink channel; and
a first determining module, configured to determine expected transmission information in a case that the first information meets a preset condition, wherein the expected transmission information comprises: information of expecting or supporting frequency hopping transmission for the target uplink signal or target uplink channel, or information of not expecting or not supporting frequency hopping transmission for the target uplink signal or target uplink channel.

13. The apparatus according to claim 12, wherein the first information comprises at least one of the following:
a type of a band on which the target uplink signal or target uplink channel is transmitted or operates, wherein the type of the band comprises licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part (BWP) on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, wherein the type of the target uplink channel comprises common channel or dedicated channel;
a value of an intra-cell guard band configuration for a carrier on which the target uplink signal is transmitted or operates; and
a configured grant related parameter.

14. The apparatus according to claim 12 or 13, wherein the preset condition comprises a first condition and/or a second condition, wherein the first condition comprises at least one of the following:
transmitted or operating on a licensed band/non-shared spectrum access band;
transmitted or operating on an unlicensed band/shared spectrum access band, wherein the operating carrier contains only one LBT sub-band or PRB set;
transmitted or operating on an unlicensed band/shared access band, wherein an operating BWP contains only one LBT sub-band or PRB set or the transmission or operation is on an initial uplink bandwidth part (initial UL bandwidth);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition comprises at least one of the following:
transmitted or operating on an unlicensed band/shared spectrum access band;
transmitted or operating on an unlicensed band/shared access band, wherein an operating carrier contains more than one LBT sub-band or PRB set;
transmitted or operating on an unlicensed band/shared access band, wherein an operating BWP contains more than one LBT sub-band or PRB set or the transmission or operation is on a non-initial UL BWP;
a frequency domain bandwidth scheduled or configured containing more than one LBT sub-band or PRB set;
the target uplink channel being a PUCCH, wherein the PUCCH is configured with interlaced transmission;
a value of an intra-cell guard band configuration for a carrier on which the target uplink signal is transmitted or operates being not equal to 0; and
a configured grant retransmission timer being configured.

15. The apparatus according to claim 14, wherein in a case that the first information meets the first condition, the expected transmission information comprises at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
or
in a case that the first information meets the second condition, the expected transmission information comprises at least one of the following:
expecting or supporting frequency hopping transmission for the target uplink signal or target uplink channel;
expecting the network-side device to configure the second configuration information, or not expecting the network-side device to configure the first configuration information; and
defaulting to performing frequency hopping transmission for the target uplink signal or target uplink channel.

16. The apparatus according to any one of claims 12 to 15, further comprising:
a second determining module, configured to determine second information based on the expected transmission information, wherein the second information comprises at least one of the following:
whether target configuration information by the network-side device for transmission of the target uplink signal or target uplink channel matches the expected transmission information; and
a frequency domain mapping method of the target uplink signal.

17. The apparatus according to claim 16, further comprising:
a first transmission module, configured to transmit the target uplink signal or target uplink channel according to the target configuration information in a case that the target configuration information matches the expected transmission information; and
a second transmission module, configured to, in a case that the target configuration information does not match the expected transmission information, ignore the target configuration information and transmit the target uplink signal or target uplink channel according to the expected transmission information, or drop transmission of the target uplink signal or target uplink channel, or feed back first indication information to the network-side device, wherein the first indication information is used to indicate that the target configuration information does not match the expected transmission information; wherein
the target configuration information not matching the expected transmission information comprises:
the target configuration information is used to configure frequency hopping transmission to be performed for the target uplink signal or target uplink channel, and the expected transmission information indicates that the target uplink signal or target uplink channel does not expect or does not support frequency hopping transmission; and
the target configuration information matching the expected transmission information comprises:
the target configuration information is used to configure frequency hopping transmission to be performed for the target uplink signal or target uplink channel, and the expected transmission information indicates that the target uplink signal or target uplink channel expects or supports frequency hopping transmission; or
the target configuration information is used to configure frequency hopping transmission not to be performed for the target uplink signal or target uplink channel.

18. An uplink transmission method, comprising:
implementing, by a terminal, channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, the terminal performing LBT for N LBT sub-bands or PRB sets and executing the frequency hopping transmission when LBT is successful for all the LBT sub-bands or PRB sets; and
before the M-th hop transmission of the frequency hopping transmission, the terminal performing LBT for one or more LBT sub-bands corresponding to the M-th hop transmission and executing the M-th hop transmission when LBT is successful; wherein
N is an integer greater than 1 and M is an integer greater than or equal to 1.

19. The method according to claim 18, wherein before the terminal performs frequency hopping transmission for the target uplink signal or target uplink channel, the method further comprises:
determining, by the terminal based on target information, to perform frequency hopping transmission for the target uplink signal or target uplink channel, wherein the target information comprises expected transmission information that the terminal expects or supports frequency hopping transmission for the target uplink signal or target uplink channel, and the expected transmission information is determined using the uplink transmission information determining method according to any one of claims 1 to 11.

20. An uplink transmission apparatus, applied to a terminal, wherein the apparatus comprises:
a channel access module, configured to implement channel access using any one of the following manners, in a case that frequency hopping transmission is to be performed for a target uplink signal or target uplink channel, if the frequency hopping transmission spans N LBT sub-bands or PRB sets:
before the first hop transmission of the frequency hopping transmission, performing LBT for N LBT sub-bands or PRB sets and executing the frequency hopping transmission when LBT is successful for all the LBT sub-bands or PRB sets; and
before the M-th hop transmission of the frequency hopping transmission, performing LBT for one or more LBT sub-bands corresponding to the M-th hop transmission and executing the M-th hop transmission when LBT is successful; wherein
N is an integer greater than 1 and M is an integer greater than or equal to 1.

21. The apparatus according to claim 20, further comprising:
a third determining module, configured to determine, based on target information, to perform frequency hopping transmission for the target uplink signal or target uplink channel, wherein the target information comprises expected transmission information that the terminal expects or supports frequency hopping transmission for the target uplink signal or target uplink channel, and the terminal further comprises the uplink transmission information determining apparatus according to any one of claims 12 to 17, and the expected transmission information is determined by the uplink transmission information determining apparatus.

22. An uplink transmission configuration method, comprising:
obtaining, by a network-side device, expected transmission information of a terminal, wherein the expected transmission information comprises: information of not expecting or not supporting frequency hopping transmission for a target uplink signal or target uplink channel, or information of expecting or supporting frequency hopping transmission for the target uplink signal or target uplink channel; and
sending, by the network-side device, target configuration information to the terminal based on the expected transmission information, wherein the target configuration information is used to configure transmission resources for the target uplink signal or target uplink channel.

23. The method according to claim 22, wherein the obtaining, by a network-side device, expected transmission information of a terminal comprises:
obtaining, by the network-side device, first information related to the target uplink signal or target uplink channel; and
determining, by the network-side device, the expected transmission information of the terminal in a case that the first information meets a preset condition.

24. The method according to claim 23, wherein the first information comprises at least one of the following:
a type of a band on which the target uplink signal or target uplink channel is transmitted or operates, wherein the type of the band comprises licensed band, unlicensed band, shared spectrum access band, or non-shared spectrum access band;
a frequency domain position of a carrier on which the target uplink signal or target uplink channel is transmitted or operates, or the number of listen before talk LBT sub-bands or resource block RB sets contained;
a frequency domain position of a bandwidth part BWP on which the target uplink signal or target uplink channel is transmitted or operates, or the number of LBT sub-bands or RB sets contained;
a frequency domain position scheduled or configured for transmission of the target uplink signal or target uplink channel, or the number of LBT sub-bands or RB sets contained;
a type of the BWP on which the target uplink signal or target uplink channel is transmitted or operates;
a frequency domain position of an LBT sub-band or resource block RB set on which the target uplink signal or target uplink channel is transmitted or operates;
a type of the target uplink channel, wherein the type of the target uplink channel comprises common channel or dedicated channel;
a value of an intra-cell guard band configuration for a carrier on which the target uplink signal is transmitted or operates; and
a configured grant related parameter.

25. The method according to claim 23 or 24, wherein the preset condition comprises a first condition and/or a second condition, wherein the first condition comprises at least one of the following:
transmitted or operating on a licensed band/non-shared spectrum access band;
transmitted or operating on an unlicensed band/shared spectrum access band, wherein the operating carrier contains only one LBT sub-band or PRB set;
transmitted or operating on an unlicensed band/shared access band, wherein an operating BWP contains only one LBT sub-band or PRB set or the transmission or operation is on an initial uplink bandwidth part (initial UL bandwidth);
a frequency domain bandwidth scheduled or configured containing only one LBT sub-band or PRB set;
non-interlaced transmission being configured; and
a value of an intra-cell guard band configuration for a carrier on which the target uplink signal is transmitted or operates being equal to 0; and
the second condition comprises at least one of the following:
transmitted or operating on an unlicensed band/shared spectrum access band;
transmitted or operating on an unlicensed band/shared access band, wherein an operating carrier contains more than one LBT sub-band or PRB set;
transmitted or operating on an unlicensed band/shared access band, wherein an operating BWP contains more than one LBT sub-band or PRB set or the transmission or operation is on a non-initial UL BWP;
a frequency domain bandwidth scheduled or configured containing more than one LBT sub-band or PRB set;
the target uplink channel being a PUCCH, wherein the PUCCH is configured with interlaced transmission;
a value of an intra-cell guard band configuration for a carrier on which the target uplink signal is transmitted or operates being not equal to 0; and
a configured grant retransmission timer being configured.

26. The method according to claim 25, wherein in a case that the first information meets the first condition, the expected transmission information comprises at least one of the following:
not expecting or not supporting frequency hopping transmission for the target uplink signal or target uplink channel;
expecting the network-side device to configure first configuration information that frequency hopping transmission is not to be performed for the target uplink signal or target uplink channel, or not expecting the network-side device to configure second configuration information that frequency hopping transmission is to be performed for the target uplink signal or target uplink channel; and
defaulting to not performing frequency hopping transmission for the target uplink signal or target uplink channel;
or
in a case that the first information meets the second condition, the expected transmission information comprises at least one of the following:
expecting or supporting frequency hopping transmission for the target uplink signal or target uplink channel;
expecting the network-side device to configure the second configuration information, or not expecting the network-side device to configure the first configuration information; and
defaulting to performing frequency hopping transmission for the target uplink signal or target uplink channel.

27. The method according to claim 26, wherein
in a case that the first information meets the first condition, the expected transmission information is expecting or supporting frequency hopping transmission for the target uplink signal or target uplink channel; or
in a case that the first information does not meet the second condition, the expected transmission information is expecting or supporting frequency hopping transmission for the target uplink signal or target uplink channel; or
in a case that the first information meets the first condition and does not meet the second condition, the expected transmission information is expecting or supporting frequency hopping transmission for the target uplink signal or target uplink channel.

28. The method according to claim 26, wherein
in a case that the first information meets the second condition, the expected transmission information is not expecting or not supporting frequency hopping transmission for the target uplink signal or target uplink channel; or
in a case that the first information does not meet the first condition, the expected transmission information is not expecting or not supporting frequency hopping transmission not to be performed for the target uplink signal or target uplink channel; or
in a case that the first information meets the second condition and does not meet the first condition, the expected transmission information is not expecting or not supporting frequency hopping transmission not to be performed for the target uplink signal or target uplink channel.

29. The method according to any one of claims 22 to 28, wherein the target uplink channel comprises at least one of a physical uplink control channel PUCCH and a physical uplink shared channel PUSCH; or the target uplink signal comprises a sounding reference signal SRS or a signal transmitted through the target uplink channel.

30. The method according to any one of claims 22 to 29, wherein in a case that the target uplink channel is a dedicated PUCCH, the target configuration information comprises a hopping configuration indication.

31. The method according to claim 30, wherein, in a case that the dedicated PUCCH is not configured with repetition, the hopping configuration indication comprises an intra-slot frequency hopping indication; or
in a case that the dedicated PUCCH is configured with repetition, the hopping configuration indication comprises: an intra-slot frequency hopping indication or an inter-slot frequency hopping indication.

32. The method according to any one of claims 22 to 31, wherein after the sending, by the network-side device, target configuration information to the terminal based on the expected transmission information, the method further comprises:
obtaining, by the network-side device, first indication information from the terminal, wherein the first indication information is used to indicate that the target configuration information does not match the expected transmission information; and
reconfiguring, by the network-side device, transmission resources for the target uplink signal or target uplink channel based on the first indication information.

33. An uplink transmission configuration apparatus, applied to a network-side device, wherein the apparatus comprises:
a second obtaining module, configured to obtain expected transmission information of a terminal, wherein the expected transmission information comprises: information of not expecting or not supporting frequency hopping transmission for a target uplink signal or target uplink channel, or information of expecting or supporting frequency hopping transmission for the target uplink signal or target uplink channel; and
a first configuration module, configured to send target configuration information to the terminal based on the expected transmission information, wherein the target configuration information is used to configure transmission resources for the target uplink signal or target uplink channel.

34. The apparatus according to claim 33, wherein the second obtaining module comprises:
an obtaining unit, configured to obtain first information related to the target uplink signal or target uplink channel; and
a determining unit, configured to determine the expected transmission information of the terminal in a case that the first information meets a preset condition.

35. The apparatus according to claim 34 or 34, further comprising:
a receiving module, configured to receive first indication information from the terminal, wherein the first indication information is used to indicate that the target configuration information does not match the expected transmission information; and
a second configuration module, configured to reconfigure transmission resources for the target uplink signal or target uplink channel based on the first indication information.

36. A terminal comprising a processor, a memory, and a program or instructions stored in the memory and capable of running on the processor, wherein when the program or instructions are executed by the processor, the steps of the uplink transmission information determining method according to any one of claims 1 to 11 are implemented or the steps of the uplink transmission method according to claim 18 to 19 are implemented.

37. A network-side device, comprising a processor, a memory, and a program or instructions stored in the memory and capable of running on the processor, wherein when the program or instructions are executed by the processor, the steps of the uplink transmission configuration method according to any one of claims 22 to 32 are implemented.

38. A readable storage medium, wherein the readable storage medium stores a program or instructions, and when the program or instructions are executed by a processor, the steps of the uplink transmission information determining method according to any one of claims 1 to 11 are implemented, or the steps of the uplink transmission method according to claim 18 or 19 are implemented, or the steps of the uplink transmission configuration method according to any one of claims 22 to 32 are implemented.
